# NEUE EUROPÄISCHE PATENTSCHRIFT

(11) **EP 2 969 937 B2**
(45) Veröffentlichungstag und Bekanntmachung des Hinweises auf die Entscheidung über den Einspruch: **01.04.2026**
(45) Hinweis auf die Patenterteilung: 02.05.2018
(21) Anmeldenummer: 14710194.3
(22) Anmeldetag: 13.03.2014
(51) Int. Cl.: C01B 21/26, B01J 23/00, C01B 21/38, B01J 23/34, B01J 23/83, B01J 23/843, B01J 23/86, B01J 23/889, B01J 35/04, B01J 37/00, B01J 37/03, B01J 37/08, C01B 21/28

(54) **VERFAHREN ZUR OXIDATION VON AMMONIAK UND DAFÜR GEEIGNETE ANLAGE**
METHOD FOR OXIDISING AMMONIA AND SYSTEM SUITABLE THEREFOR
PROCÉDÉ D'OXYDATION D'AMMONIAC ET INSTALLATION Y RELATIVE

(30) Priorität: 14.03.2013 DE 102013004341
(43) Veröffentlichungstag der Anmeldung: 20.01.2016
(73) Patentinhaber: thyssenkrupp Uhde GmbH, 44141 Dortmund (DE)
(72) Erfinder: SCHWEFER, Meinhard, 59872 Meschede (DE); SIEFERT, Rolf, 33378 Rheda-Wiedenbrück (DE); RUTHARDT, Klaus, 44265 Dortmund (DE); CREMONA, Alberto, I-29014 Castell'Arquato (PC) (IT); VOGNA, Edoardo, I-28100 Novara (IT)
(74) Vertreter: Gulde & Partner
(86) Internationale Anmeldenummer: PCT/EP2014/000669
(87) Internationale Veröffentlichungsnummer: WO 2014/139678

(56) Entgegenhaltungen:
- EP-A1- 0 799 792
- EP-A1- 0 834 466
- WO-A1-01/49603
- WO-A1-2006/010904
- WO-A1-2014/114764
- WO-A1-98/28073
- WO-A2-02/090256
- DE-A1- 102005 023 605
- GB-A- 1 342 577
- US-A- 4 183 906
- US-A- 4 692 321
- US-A- 5 736 116
- US-A1- 2012 034 148
- US-A1- 2012 183 467
- US-A1- 2012 321 529
- PEREZ-RAMIREZ ET AL.: "Formation and control of N2O in nitric acid production - Where do we stand today", APPLIED CATALYSIS B: ENVIRONMENTAL, vol. 44, 2003, pages 117 - 151, XP055361051
- "Nitric acid", INORGANIC CHEMICAL INDUSTRY, February 1998 (1998-02-01), pages 1 - 7, XP055557912, Retrieved from the Internet <URL:https://www3.epa.eov/ttn/chief/old/ap42/ch08/s08/final/c08s08febl998.pdf>
- PEREZ-RAMIREZ ET AL.: "Mechanism of ammonia oxidation over oxides studied by temporal analysis of products", JOURNAL OF CATALYSIS, vol. 250, 2007, pages 240 - 246, XP022200521

## Beschreibung

Die Erfindung betrifft eine verbesserte Anlage zur Herstellung von Oxidationsprodukten des Ammoniaks.

### Stand der Technik und Problemstellung

Bei der großtechnischen Herstellung von Stickstoff enthaltenden Grundstoffen für die chemische Industrie bildet die katalytische Oxidation von Ammoniak (NH₃) zu NOₓ-Stickoxiden oftmals eine Basisreaktion. Genannt sei hier die Herstellung von Salpetersäure (HNO₃) als Ausgangsstoff z.B. für nitrathaltige Düngemittel, oder auch die Herstellung von Hydroxylamin bzw. Hydroxylammoniumsalzen zur Produktion von Caprolactam und damit von Polyamiden.

Die nachfolgenden Ausführungen zum Stand der Technik beziehen sich beispielhaft auf die Herstellung von HNO₃ durch katalytische Oxidation von NH₃.

Die Herstellung von Salpetersäure ist einer der etabliertesten Prozesse der chemischen Technik, welcher nach Einführung des Haber-Bosch-Verfahrens zur NH₃-Synthese von W. Ostwald auf Basis von Platin-Katalysatoren zur industriellen Reife entwickelt wurde und dessen Konzeption auch heute noch die Basis der modernen HNO₃-Herstellung bildet.

So wurde die erste technische Anlage mit einem Platin-Katalysator (gefurchte Streifen aus Pt-Folie) zur Produktion von 1500 jato Ammoniumnitrat im Jahre 1906 in Gerthe bei Bochum errichtet. Kurze Zeit später (1909) erschienen erste Patente zur Verwendung von gewebten Platin-Netzen als Katalysatoren. Wiederum etwas später wurden diese dann mit Rhodium legiert. Obwohl der Katalysator hohe Investitionskosten mit sich bringt und sich während der NH₃-Oxidation verbraucht (Platin brennt ab), werden diese Katalysatorsysteme bis zur heutigen Zeit verwendet und stellen in modifizierter Form (maßgeschneiderte Gestricke) immer noch den Stand der Technik dar (vgl. Winnacker Küchler, Chemische Technik - Prozesse und Produkte, 5. Auflage, Band 3, Kapitel 3, S. 248-275, Wiley-VCH Verlag GmbH & Co. KGaA).

In jüngerer Zeit finden zunehmend Platinmetall-Netze mit hohen Pd-Anteilen Verwendung, da diese nicht nur eine gewisse Reduzierung der Kosten ermöglichen, sondern auch eine Reduzierung des bei der NH₃-Oxidation unerwünscht entstehenden Lachgases (N₂O) bewirken, welches ein Treibhausgas ist.

Übliche Dimensionen für die Platinmetall-Netze, welche in einem häufig als "Brenner" bezeichneten Ammoniakoxidationsreaktor auf breiter Fläche aufgespannt sind, liegen im Bereich von 0,5 - 5 m Durchmesser. Die Stärke der Netzpackung beträgt üblicherweise, je nach Anzahl der eingesetzten Netze, wenige Millimeter bis zu ca. zwei Zentimeter.

Die Netze werden von einem Gasgemisch aus typischerweise etwa 9-12 Vol.-% NH₃ und Luft durchströmt, wobei sich an den Netzen durch die Exothermie der Oxidationsreaktion eine Temperatur von etwa 800 - 950°C einstellt. Dabei wird NH₃ sehr selektiv zu Stickstoffmonoxid (NO) oxidiert (vgl. nachstehendes Reaktionsschema 1), welches dann im Laufe des weiteren Prozesses zu Stickstoffdioxid (NO₂) oxidiert wird (Reaktionsschema 2) und schließlich mit Wasser in einem Absorptionsturm zu HNO₃ umgesetzt wird (Reaktionsschema 3).

Primäre NH₃-Oxidation - Zielreaktion:

4 NH₃ + 5 O₂ → 4 NO + 6 H₂O (1)

NO-Oxidation:

2 NO + O₂ → 2 NO₂ (2)

HNO₃-Bildung:

3 NO₂ + H₂O →2 HNO₃ + NO (3)

Als Bruttoreaktion resultiert daraus:

NH₃ + 2 O₂ → HNO₃ + H₂O (4)

Auch wenn demgemäß der in der Verbrennungsluft enthaltene O₂-Gehalt von 21 Vol.-% gerade ausreicht, um formal eine vollständige Überführung von 10 Vol.-% NH₃ in HNO₃ zu gewährleisten, wird bei der technischen Herstellung von HNO₃ dem Prozessgas nach der katalytischen NH₃-Oxidation und vor Eintritt in den Absorptionsturm weiterer Luftsauerstoff (Sekundärluft) zugeführt, um die NO-Oxidation und damit Bildung von HNO₃ im Absorptionsturm zu beschleunigen. Typischerweise beträgt der Restgehalt an Sauerstoff des den Absorptionsturm verlassenden Abgases ca. 1- 5 Vol.-%.

Nach gängigem Verständnis der primären Oxidationsreaktion (vgl. Handbook of Heterogeneous Catalysis, 2nd Edition, Band 5, 2008, Kapitel 12.2.7.1, S. 2582, WILEY-VCH Verlag GmbH & Co. KGaA, 2008) ist bei der Verbrennung des NH₃ ein hoher Partialdruck des Sauerstoffs erforderlich, um auf der Katalysatoroberfläche die Bildung von Stickstoff und Lachgas, als wertlosen Nebenprodukten zu unterdrücken. Diese Beobachtung steht im Einklang zu den Stöchiometrien der Bildung von N₂ und N₂O (vgl. nachstehende Reaktionsschemata 5 und 6), die verglichen zur NO-Bildung (Rektionsschema 1) weniger Sauerstoff erfordern.

primäre NH₃-Oxidation - Nebenreaktionen:

4 NH₃ + 3 O₂ → 2 N₂ + 6 H₂O (5)

4 NH₃ + 4 O₂ → 2 N₂O + 6 H₂O (6)

Die Bildung von NO₂, welche gemäß Reaktionsschema (7) eine erhöhte Menge an Sauerstoff benötigen würde, findet an Platinmetallkatalysatoren nicht statt.

4 NH₃ + 7 O₂ → 4 NO₂ + 6 H₂O (7)

Die Bildung der Nebenprodukte bzw. NOₓ-Selektivität ist dabei auch abhängig vom allgemeinen Betriebsdruck der NH₃-Oxidation. Je höher der Druck ist, umso niedriger fällt die NOₓ-Ausbeute aus. Die nach dem heutigen Stand der Technik mit verschiedenen Verfahrensvarianten (Verbrennungsdrucken) erreichbaren NOₓ-Ausbeuten sind in nachstehender Tabelle wiedergegeben (entnommen aus Winnacker-Küchler, Chemische Technik - Prozesse und Produkte, 5. Auflage, Band 3, Kapitel 3, S. 248-275, Wiley-VCH Verlag GmbH & Co. KGaA).

| **Verbrennungsdruck** | **NH₃-Gehalt vor dem Netz** | **NOₓ-Ausbeute** |
|---|---|---|
| atmosphärisch | 12,0 - 12,5 Vol% | 95 - 98% |
| Mitteldruck (3-6 bar) | 9,5 - 11,0 Vol% | 93 - 97% |
| Hochdruck (7-14 bar) | 10,0 - 11,0 Vol% | 90 - 95% |

Ein Manko der Platinmetall-Netzkatalysatoren ist allerdings die nur geringe Stabilität des Katalysators bei der hohen Betriebstemperatur von ca. 900°C. Durch Abbrand des Edelmetalls verbraucht sich der Katalysator, je nach herrschendem Verbrennungsdruck mit ca. 0,04 - 0,4 g Pt/t HNO₃, so dass der Katalysator in regelmäßigen Abständen, je nach Verbrennungsdruck ca. alle 3 Monate bis 15 Monate, erneuert werden muss. Dies führt zu nicht unerheblichen Kosten, auch wenn ein Teil des abgebrannten Platins über verschiedene Fängersysteme (z.B. Pd-Netze) zurück gewonnen wird.

Aufgrund dieser Nachteile wurden immer wieder Bestrebungen angestellt, alternative metalloxidbasierte Katalysatormaterialien zu entwickeln, um insbesondere Platin einzusparen. Eine Übersicht über die vielfältigen Bemühungen zur Verwendung oxidischer Katalysatoren ist in Sadykov et al., Appl. Catal. General A: 204 (2000), S. 59-87 gegeben. So wurden vor allem in Osteuropa Katalysatorsysteme basierend auf dotierten Eisenoxiden verwendet, oftmals auch in Kombination mit Platinmetall-Netzen, während in der westlichen Hemisphäre überwiegend mit Kobaltoxid-basierten Systemen operiert wurde.

Alle diese Versuche zur Etablierung Platinmetall-freier NH₃-Oxidationskatalysatoren konnten sich in der Technik aber bislang nicht durchsetzen, da diese im Vergleich zu hochselektiven Platinmetallkatalysatoren geringere Selektivitäten der NO-Bildung aufweisen und der Produktpreis in modernen Anlagen zur HNO₃-Produktion zu mehr als 70 % durch den NH₃-Preis bestimmt wird.

Vielfach erleiden die potentiell aktiven, edelmetallfreien Übergangsmetalloxid-Katalysatoren unter Praxisbedingungen auch eine erhebliche zeitliche Desaktivierung, welche neben Sinterungseffekten aufgrund der hohen thermischen Belastung oft auch durch eine (teilweise) Reduktion der Oxide mit NH₃ zu entsprechend niedervalenteren Oxiden bedingt ist, die im Allgemeinen eine geringere Aktivität und Selektivität zur NO-Bildung aufweisen. Genannt seien hier beispielsweise die Reduktion von MnO₂ und Mn₂O₃ zu Mn₃O₄, die Reduktion von CuO₂ zu CuO, die Reduktion von α-Fe₂O₃ zu Fe₃O₄ und FeO oder, besonders prominent, die Reduktion von hochaktivem Co₃O₄ zu minderaktivem CoO.

Um einer derartigen Desaktivierung entgegenzuwirken wurde bei einem technischen Einsatz von Co₃O₄-Katalysatoren zur NH₃-Oxidation in einem Festbettreaktor der Firma Incitec Ltd. in Australien das Katalysatorbett periodisch umgeschichtet, um den bei hoher NH₃-Konzentration im vorderen Teil des Katalysatorbettes reduzierten Katalysator im hinteren Teil des Katalysatorbettes mit restlichem Sauerstoff zu reoxidieren. Dem gleichen Gedanken folgen auch entsprechende Arbeiten von Schmidt-Szalowski et al. (vergl. dazu Appl. Catal. A: General 177 (1998) S. 147-157), welche die Oxidation von NH₃ über Co₃O₄-Katalysatoren in einer Wirbelschicht propagieren. Durch die Verwirbelung der Katalysatorpartikel soll hier im unteren Teil des Wirbelbettes eine kontinuierliche Reoxidation des gebildeten CoO mit Sauerstoff erfolgen.

Eine weiterhin vielfach untersuchte Möglichkeit die desaktivierende Reduktion der Oxide zu unterdrücken, ist die Dotierung d.h. Stabilisierung der o.g. binären Oxide mit anderen schwerreduzierbaren Metalloxiden, was aber oftmals mit einer Verringerung der spezifischen Aktivität einhergeht, wie von Sadykov et al. in Appl. Catal. General A: 204 (2000) S. 59-87 beschrieben. Genannt sei hier beispielhaft die Dotierung von α-Fe₂O₃ mit Al₂O₃, was Grundlage für die in den 1970er Jahren in der UDSSR entwickelten zweistufigen Katalysatorsysteme zur NH₃-Oxidation in Kombination mit einer reduzierten Menge an herkömmlichen Pt/Rh-Netzkatalysatoren bildete. Auch können die Übergangsmetalloxide durch Dotierung mit anderen Metalloxiden in ternäre Mischoxide mit anderen Kristallstrukturen überführt werden, in welchen die höheren Oxidationsstufen der Übergangsmetalle eine prinzipiell geringe Reduzierbarkeit aufweisen. Hier sind vor allem perowskitische Strukturen zu nennen, welche sich durch eine hohe Aktivität zur Bildung von NO und eine hohe chemische Stabilität auszeichnen.

So werden beispielsweise in US 4,812,300 A Mischoxidkatalysatoren des Perowskit-Typs mit der allgemeinen Formel ABO_{3±δ} zur Ammoniakoxidation beansprucht, wobei A für Alkalimetalle, Erdalkalimetalle, Lanthanide oder Actinide, B für ein oder mehrere Elemente der Gruppen IB, IVB bis VIIB und VIII steht. Die Katalysatoren sollen bei 1000 °C einen Sauerstoff-Gleichgewichtspartialdruck von größer 10⁻¹⁵ bar aufweisen, so dass ein guter Transfer des Gittersauerstoffs auf das NH₃-Molekül möglich ist, ohne dass die strukturelle Integrität des Perowskits beeinträchtigt wird. Die Testung der Katalysatoren erfolgte hier in einer Apparatur bzw. unter Bedingungen der Temperatur-programmierten Reduktion (TPR) bei Umgebungsdruck und einer NH₃-Konzentration von 3,3 Vol.-% und einem Sauerstoffgehalt 6,7 Vol.-% in Helium. Besonders bevorzugte Perowksit-Katalysatoren enthalten Lanthan und/oder Strontium als A-Platz-Element und Kobalt, Nickel und/oder Mangan als B-Platz-Element.

WO-99/25650 A1 beschreibt eine Vorrichtung zur NH₃-Oxidation, in welcher bevorzugt Mischoxid-Katalysatoren gebildet aus Seltenerdmetallen und Kobalt verwendet werden. Beispielhaft wird die Oxidation von 10 Vol.-% NH₃ in Luft bei Atmosphärendruck mit einem Lanthan-/Cer-/Kobalt-Mischoxid (Atomverhältnis La:Ce:Co = 8:2:10) beschrieben.

In US 3,888,792 A wird der Einsatz von mit Seltenerd-Metallen dotiertem Co₃O₄ zur NH₃-Oxidation beschrieben, welche gegenüber reinem Co₃O₄ erhöhte Selektivität und Langzeitstabilität aufweisen sollen. Die Testung ausgewählter Muster erfolgte bei einem NH₃/Luft-Volumenverhältnis von 1/10 unter Atmosphärendruck. In einem Langzeittest über 900 h mit Ce dotiertem Co₃O₄, bei welchem auch eine zwischenzeitliche Druckerhöhung auf 7 bar erfolgte, betrug die Ausbeute an NOₓ immer mehr als 90 %.

In WO 2009/028949 A1 werden Mischoxid-Katalysatoren zur Herstellung von NO durch Umsetzung eines Gasgemisches bestehend aus NH₃ und O₂ beansprucht, die der allgemeinen Formel A₃₋ₓBₓO_{9-y} genügen. A und B sind dabei ausgewählt aus Metallen der Gruppe Mn, Cr. Co, Fe und Al. Die Testung der Katalysatoren erfolgte bei Atmosphärendruck mit einem Gasgemisch mit einer Zusammensetzung von 10 Vol.-% NH₃ in Luft oder 10 Vol.-% NH₃, 18 Vol.-% O₂ und 72 Vol.-% Argon. Die maximal erreichte NOₓ-Selektivität von 96 %, wurde erzielt mit einem Mischoxid der Zusammensetzung Mn_{1,5}Co_{1,5}O₄.

Als weiteres Beispiel sei US 3,962,138 A genannt. Hier werden Katalysatoren zur NH₃-Oxidation beansprucht, welche aus 60-95 % Co₃O₄, 5-15 % Al₂O₃ sowie 0-25 % eines Oxides von Thorium, Cer, Zink oder Cadmium bestehen. Die Testung der verformten Katalysatoren erfolgte in einem Reaktor mit 10 cm Durchmesser bei einem Druck von 4-5 bar mit einer Gasmischung aus 10 Vol.-% NH₃ in Luft. Mit den besten Katalysatoren, welche jeweils ca. 10 % ThO₂ enthalten, wurde nach einer Betriebszeit von 400 h eine NOₓ-Ausbeute von ca. 93-95% erzielt. Der Zusatz von Al₂O₃ und ThO₂ bewirkte eine signifikante Verbesserung der NOₓ-Ausbeute und Standzeit der Katalysatoren.

DE 10 2012 000 419 A1 offenbart eine Niedertemperaturoxidation von Ammoniak bei der Salpetersäureherstellung durch Leiten eines ammoniak- und sauerstoffhaltigen Gasstroms über eine auf weniger als 500°C aufgeheizte Trägerschicht aus Partikeln eines LaSrCo-Oxidkatalysators und anschließendes Abkühlen des stickstoffoxid-haltigen Gasstroms. Beispielhaft wird diese Reaktion durch Umsetzung eines Gasstroms beschrieben, der 5 Vol.-% Kohlendioxid, 5 Vol.-% Wasser, 10 Vol.-% Sauerstoff, 200 ppm Ammoniak und als Rest Stickstoff enthielt.

In der WO 2006/010904 A1 werden Oxidationsverfahren beschrieben, die an ausgewählten Perowskit-Katalysatoren durchgeführt werden. Die Katalysatoren enthalten Bismuth und/oder Lanthanide mit Ausnahme von Lanthan. Als Modellreaktion wird die Oxidation von Ammoniak in Luft beschrieben.

DE 199 03 616 A1 beschreibt ein Verfahren zur Herstellung von Stickoxiden mit niedrigem Oxidationsgrad durch katalytische Oxidation von Ammoniak im Gemisch mit Luft und Wasserdampf an einem Oxidationskatalysator. Es werden Edelmetall enthaltende Katalysatoren oder Metalloxide enthaltende Katalysatoren genannt.

WO 01/49603 A1 offenbart einen Ceroxid und Manganoxid sowie Magnesium-, Aluminium-, Zink- oder Calciumoxid enthaltenden Katalysator und einen Aktivator für die selektive Oxidation von Ammoniak mit Sauerstoff zu Distickstoffoxid N₂O. Die Reaktion erfolgt bei relativ niedrigen Temperaturen von 250°C oder darunter.

In DE 2 148 707 A wird ein Katalysator für die Oxidation von Ammoniak zu Stickoxiden beschrieben. Dieser besteht hauptsächlich aus Kobaltoxid und ist durch eine spezifische Oberfläche von 0,1-7 m²/g und eine Volumen/-Gewichts-Porosität von 1-15 % gekennzeichnet.

Die US-A-5,849,257 beschreibt ein Verfahren zur Herstellung von Stickoxiden, bei dem Ammoniak mit Sauerstoff in Gegenwart von Wasserdampf an einem Kupfer-/Manganoxid-Katalysator umgesetzt wird. Der Katalysator ist durch ein spezielles Röntgenspektrum gekennzeichnet.

EP 0 384 563 B1 beschreibt ein Verfahren zur Oxidation von Ammoniak in Gegenwart eines Kobaltoxid-Katalysators, der mit Lithium dotiert worden ist.

US 2013/0039828 A1 offenbart eine Katalysatorstruktur, die sich für ein Ammoniak-oxidationsverfahren eignet und die sich durch eine flexible Anordnung von Katalysatoreinheiten auszeichnet. Katalysatoren können Platinmetalle oder auch andere Metalle enthalten.

In einer wissenschaftlichen Publikation [J. Catal. 276 (2010) 306 - 313] beschreiben Biausque und Schuurmann den Mechanismus der Hochtemperatur-Oxidation von NH₃ zu NO über einem LaCoO₃-Katalysator. Dazu werden u.a. verschiedene Versuche unter Variation des O₂- und NH₃-Gehaltes durchgeführt, wobei in einer Versuchsreihe - ausgehend von einer NH₃-Konzentration von 3 Vol.-%- der Sauerstoffgehalt zwischen 10 Vol.-% und 40 Vol.-% und in einer weiteren Versuchsreihe - ausgehend von einem Sauerstoffgehalt von 20 Vol.-% - der NH₃-Gehalt zwischen 1 Vol.-% und 5 Vol.-% variiert wurde. Dabei wurden im Hinblick auf die erreichte NOₓ-Ausbeute eine negative Abhängigkeit vom O₂-Partialdruck und eine positive Abhängigkeit vom NH₃-Partialdruck gefunden. D.h. mit steigendem O₂-Partialdruck und abnehmendem NH₃-Partialdruck wurde eine vermehrte Bildung von N₂ und N₂O beobachtet, was im Gegensatz zum bekannten Verhalten der Platin-Katalysatoren zur NH₃-Oxidation steht.

In Catal. Lett. (2011) 141: 1215-8 beschreiben Tianfeng Hou et al. die katalytische Oxidation von Ammoniak zu Stickstoffmonoxid in Gegenwart von Perowskitkatalysatoren des Typs LaMnO₃ und LaVO₄.

In vielen der oben zitierten Fälle aus dem Stand der Technik wird, wie im klassischen Ostwald-Verfahren üblich, die Oxidation von NH₃ in Luft untersucht, bzw. in den praktischen Beispielen ein entsprechendes O₂/NH₃-Volumenverhältnis von mindestens 1,9 eingestellt. Fast immer sind die Untersuchungen bzw. veröffentlichten Daten zudem auf atmosphärische Bedingungen beschränkt, welche deutlich höhere Selektivitäten der NO-Bildung liefern als für erhöhte Drücke zu erwarten sind.

Dennoch wird der mit Pt/Rh-Netzkatalysatoren gesetzte, hohe Maßstab der NOₓ-Ausbeuten nicht erreicht. Dies gilt insbesondere auch bei hohen Durchsätzen an NH₃, d.h. bei einer hohen Eingangskonzentration von 10 Vol.-% und erhöhtem Betriebsdruck, welche für einen technischen Betrieb aufgrund dann kleiner Apparategrößen und einer optimalen Abstimmung auf die nachfolgende NO/NO₂-Absorption vorteilhaft und üblich sind. So reduziert sich üblicherweise die Ausbeute an NOₓ bei erhöhter Konzentration bzw. erhöhtem (Partial-)druck an Ammoniak. Dies ist insbesondere der Fall für bekannte oxidbasierte Katalysatoren wie z.B. Co₃O₄ (vergl. beispielsweise Andrew, S.P.S.; Chinchen, G.C., "The loss in selectivity of a cobalt oxide ammonia oxidation catalyst" in "Studies in surface science and catalysis"; 6 (1980), S. 141-148, (Catalyst deactivation : proceedings of an international symposium, Antwerp, October 13-15, 1980)), welche verglichen zu metallischen Platin-basierten Katalysatoren eine deutlich niedrigere Aktivität aufweisen. Ein hoher Partialdruck an Ammoniak fördert in verstärktem Maße unerwünschte Neben- und Folgereaktionen, welche zur Bildung von N₂ oder auch N₂O führen.

In der großtechnischen Anwendung spielen Übergangsmetalloxid-Katalysatoren zur NH₃-Oxidation daher, abgesehen von der erwähnten gelegentlichen Kombination von Eisenoxid-basierten Katalysatoren mit Edelmetallnetzen trotz vielfältiger Bemühungen keine Rolle.

Nach wie vor kommen hier fast ausnahmslos Pt/Rh-Netzkatalysatoren zur Anwendung. Wie zuvor erwähnt kann dabei je nach Betriebsdruck der NH₃-Verbrennung (atmosphärisch / Mitteldruck / Hochdruck) und herrschendem Druckniveau der NOₓ-Absorption im Absorptionsturm zwischen verschiedenen Verfahrens- bzw. Anlagenvarianten unterschieden werden. (vgl. auch Winnacker-Küchler, Chemische Technik - Prozesse und Produkte, 5. Auflage, Band 3, Kapitel 3, S. 248-275, Wiley-VCH Verlag GmbH & Co. KGaA, Weinheim, 2005; Thiemann, M., Scheibler, E., Wiegand, K. W. Nitric Acid, Nitrous Acid, and Nitrogen Oxides, Wiley-VCH Verlag GmbH & Co. KGaA, 2000).

Von Bedeutung sind heute dabei vor allem das sog. Ein- oder Monodruckverfahren, bei dem Mitteldruck oder Hochdruck sowohl für die NH₃-Verbrennung als auch für die NOₓ-Absorption eingesetzt werden und das sog. Zweidruckverfahren mit NH₃-Verbrennung unter Mitteldruck und NOₓ-Absorption unter Hochdruck. Die früher üblichen Anlagen mit Verbrennung bei Atmosphärendruck und Mitteldruckabsorption sind heute weitgehend durch die bei größeren Kapazitäten wirtschaftlicheren Eindruck- bzw. Zweidruckverfahren abgelöst worden.

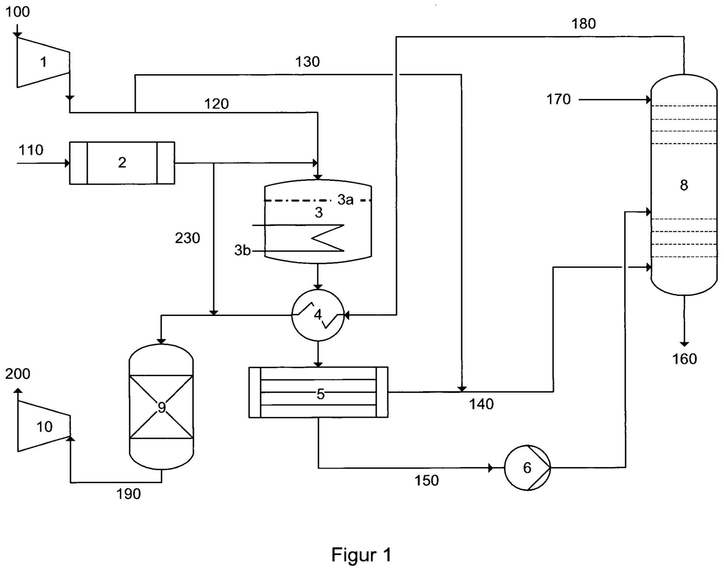

Figur 1 zeigt ein vereinfachtes Fließbild einer typischen Monomitteldruckanlage.

So enthalten Anlagen zur Herstellung von HNO₃ typischerweise einen NH₃-Verdampfer zur Bereitstellung von gasförmigem NH₃, einen Luftverdichter für die Verbrennungsluft, einen NH₃-Oxidationsreaktor zur Aufnahme der Pt-Netzkatalysatoren mit integriertem Prozessgaskühler, verschiedene Wärmetauscher bzw. Kühler und Kondensatoren zur weiteren Abkühlung des Prozessgases bzw. zur Aufheizung des den Absorptionsturm verlassenden Restgases, einen Absorptionsturm zur Absorption von NOₓ und Bildung von HNO₃, einen Reaktor zur (katalytischen) Entfernung von restlichem im Restgas enthaltenen NOₓ und ggf. N₂O sowie eine Restgasturbine zur Energierückgewinnung bei der Entspannung des Restgases in die Atmosphäre. In Zweidruckanlagen findet sich angeordnet zwischen NH₃-Oxidationsreaktor und Absorptionsturm eine zusätzliche Kompressionsstufe zur Verdichtung des Prozessgases auf den gewünschten Absorptionsdruck.

US 2012/0183467 A1 und WO 01/49603 A1 und EP 0 799 792 A1 und WO 2006/010904 A1 beschreiben weitere Vorrichtungen und Verfahren zur Oxidation, insbesondere auch Katalysatoren speziell zur Ammoniakoxidation.

### Aufgabe

Aufgabe der vorliegenden Erfindung ist es, auf Basis von Übergangsmetalloxid-Katalysatoren eine dafür geeignete Anlage zur NH3 -Oxidation bereitzustellen, bei der im Vergleich zu den bislang mit diesen Katalysatoren erzielten Ausbeuten durch erhöhte Ausbeuten an NOx ausgezeichnet ist.

### Beschreibung der Erfindung

Diese Aufgabe wird gelöst durch die Bereitstellung eines nicht zur Erfindung gehörenden Oxidationsverfahrens von Ammoniak mit Sauerstoff in der Gegenwart von Katalysatoren enthaltend mindestens ein Übergangsmetalloxid, das kein Oxid eines Platinmetalls ist, bei dem das Verhältnis der molaren Mengen von O2 und NH3 im dem Katalysator zugeführten Reaktionsgas am Eintritt des Eduktgasgemisches in das Katalysatorbett auf einen Wert deutlich unterhalb des herkömmlichen Verhältnisses von 1,9 mol/mol eingestellt wird, so dass eine hohe Ausbeute an NOx erzielt wird, und bei dem andere Katalysatoren verwendet werden, als die bislang eingesetzten kommerziell verfügbaren Platinmetall-Netzkatalysatoren.

So wurde überraschenderweise von uns gefunden, dass bei Verwendung von Nicht-Platinmetall-Katalysatoren, d.h. von ausgewählten Übergangsmetalloxid-Katalysatoren wie z.B. LaCoO₃ oder LaMnO₃, die Ausbeute am Wertprodukt NOₓ signifikant gesteigert werden kann, wenn der Sauerstoffgehalt bzw. das O₂/NH₃-Verhältnis im Eduktgasgemisch so eingestellt wird, dass nahezu sämtlicher Sauerstoff mit Ammoniak gemäß den primären Oxidationsreaktionen (Reaktionsschemata 1, 5, 6 und 7) umgesetzt wird und kein oder nur noch wenig Restsauerstoff im resultierenden Produktgas verbleibt. Ein hoher Sauerstoffüberschuss, wie sonst üblich, hat hier eine negative Wirkung.

Es hat sich herausgestellt, dass durch Reduzierung des Sauerstoffgehaltes bzw. desmolaren Verhältnisses von Sauerstoff zu Ammoniak vor Eintritt des Eduktgasgemisches in das Katalysatorbett die Ausbeute an NOₓ auch bei erhöhtem Partialdruck von NH₃, d.h. erhöhtem Gesamtdruck oder erhöhter NH₃-Konzentration auf Werte angehoben werden kann, welche sonst nur mit Platinmetallkatalysatoren (Pt/Rh-Netzen) erreicht werden können.

Bei einem Verfahren zur Oxidation von Ammoniak mit Sauerstoff in Gegenwart von Katalysatoren, enthaltend mindestens ein Übergangsmetalloxid, das kein Oxid eines Platinmetalls ist, bei dem das Verhältnis der molaren Mengen von Sauerstoff zu Ammoniak am Eintritt des Eduktgasgemisches in das Katalysatorbett auf Werte von 1,25 - 1,75 mol O2 /mol NH3 eingestellt wird und die Temperatur am Austritt des Produktgases aus dem Katalysatorbett zwischen 700°C und 950°C beträgt.

Insbesondere liegt das einzustellende molare Verhältnis von Sauerstoff zu Ammoniak im Bereich von 1,30 - 1,75 mol O2 /mol NH3 , besonders bevorzugt wird ein Verhältnis von 1,35 - 1,60 mol O2 /mol NH3 und ganz besonders bevorzugt wird ein Verhältnis von 1,35-1,50 mol O2 /mol NH3 eingestellt.

Bei der Durchführung einer bevorzugten Variante des Verfahrens wird das Verhältnis der molaren Mengen von Sauerstoff zu Ammoniak des Eduktgasgemisches am Eintritt in das Katalysatorbett so ausgewählt, dass es im Bereich zwischen 0,1 mol O2 /mol NH3 unterhalb und 0,4 mol O2 /mol NH3 oberhalb eines optimalen molaren Verhältnisses liegt, wobei das optimale molare Verhältnis dasjenige Verhältnis der molaren Mengen von Sauerstoff zu Ammoniak am Eintritt des Eduktgasgemisches in das Katalysatorbett ist, bei dem ein Maximum der Ausbeute an NOx erzielt wird.

Besonders bevorzugt liegt das Verhältnis der molaren Mengen von Sauerstoff zu Ammoniak am Eintritt in das Katalysatorbett zwischen 0,05 mol O₂/mol NH₃ unterhalb und 0,3 mol O₂/mol NH₃ oberhalb des optimalen Verhältnisses, besonders vorteilhaft zwischen 0,025 mol O₂/mol NH₃ unterhalb und 0,25 mol O₂/mol NH₃ oberhalb des optimalen Verhältnisses.

Die Ermittlung des optimalen molaren Verhältnisses von O₂/NH₃ bzw. des optimalen Sauerstoffgehaltes kann anhand einer Serie von entsprechenden Versuchen unter den konkret gewünschten Verfahrensbedingungen erfolgen, also mit einem ausgesuchten Katalysator in einer definierten Anlage, bei definierter Raumgeschwindigkeit und Anströmgeschwindigkeit, bei definierter Austritts- oder Eintrittstemperatur, definiertem Druck und definiertem Reaktionsmedium enthaltend Sauerstoff und eine definierte Menge an Ammoniak. Dabei wählt man bei konstanter NH₃-Konzentration die Konzentration von Sauerstoff am Eintritt in das Katalysatorbett so, dass das entsprechende molare O₂/NH₃-Verhältnis zwischen einem minimalen O₂/NH₃-Verhältnis, von beispielsweise 1,25 mol/mol und einem maximalen O₂/NH₃-Verhältnis, von beispielsweise 1,75 mol/mol liegt, variiert dieses vorzugsweise mit einer ausgewählten Schrittweite, beispielsweiseeiner Schrittweite von kleiner gleich 0,1 mol O₂/mol NH₃, und ermittelt die jeweils erzielte Ausbeute an NOₓ. Dasjenige molare Verhältnis von Sauerstoff zu Ammoniak, welches unter den ansonsten gleichgehaltenen Reaktionsbedingungen die maximale Ausbeute an NOₓ liefert, ist dann das optimale Verhältnis von Sauerstoff zu Ammoniak.

In einer anderen bevorzugten Variante des Verfahrens wird das Verhältnis der molaren Mengen von Sauerstoff zu Ammoniak am Eintritt des Eduktgasgemisches in das Katalysatorbett auf Werte von kleiner gleich 1,75 mol O2 /mol NH3 , vorzugsweise auf Werte von kleiner gleich 1,60 mol O2 /mol NH3 und besonders bevorzugt auf Werte von kleiner gleich 1,50 mol O2 /mol NH3 eingestellt, wobei der Sauerstoffgehalt im Produktgas am Austritt des Katalysatorbettes mindestens 0,3 Vol.-%, bevorzugt mindestens 0,4 Vol.-% und insbesondere bevorzugt mindestens 0,5 Vol.-% beträgt.

In einer bevorzugten Ausführungsform dieser bevorzugten Variante des Verfahrens wird ein geeignetes molares Verhältnis von O2 /NH3 von kleiner gleich 1,75 mol O2 /mol NH3 bzw. ein geeigneter Sauerstoffgehalt des Eduktgasgemisches am Eintritt des Katalysatorbettes durch den Sauerstoffgehalt des Produktgases am Austritt des Katalysatorbettes festgelegt, indem ein geeignetes molares Verhältnis von O2 /NH3 bzw. - bei vorgegebener NH3 -Eintrittskonzentration - ein geeigneter Sauerstoffgehalt am Eintritt des Katalysatorbettes so ausgewählt wird, dass der Sauerstoffgehalt im Produktgas am Austritt des Katalysatorbettes zwischen 0,3 Vol.-% und 10,0 Vol.-%, bevorzugt - zwischen 0,4 Vol.-% und 6,0 Vol.-%, und besonders bevorzugt zwischen 0,5 und 4,0 Vol.-% resultiert, ganz besonders zwischen 0,3 Vol.-% und 2,0 Vol.-%, insbesondere zwischen 0,4 Vol.-% und 2,0 Vol.-%, äußerst bevorzugt zwischen 0,5 Vol.-% und 1,5 Vol.-% beträgt.

Die praktische Einstellung des geeigneten O2 /NH3 -Verhältnisses kann für bestimmte Verfahrensbedingungen, also mit einem ausgesuchten Katalysator in einer definierten Anlage, bei definierter Raumgeschwindigkeit und Anströmgeschwindigkeit, bei definierter Austritts- oder Eintrittstemperatur, definiertem Druck und definiertem Reaktionsmedium enthaltend Sauerstoff und Ammoniak, bspw. so erfolgen, dass unter diesen Verfahrensbedingungen ausgehend von einem vorbestimmten O2 /NH3 -Verhältnis, beispielsweise ausgehend von einem herkömmlichen O2 /NH3 -Verhältnis von 1,9 mol/mol oder insbesondere ausgehend von einem O2 /NH3 -Verhältnis von 1,75 mol/mol, bei einer festen Menge an Ammoniak der Sauerstoffgehalt am Eingang des Katalysatorbettes soweit reduziert wird, bis im Produktgas am Austritt des Katalysatorbettes die vorgenannten geringen Sauerstoffgehalte vorhanden sind bzw. detektiert werden.

Die Bestimmung des NOₓ- und O₂-Gehaltes am Austritt des Katalysatorbettes kann mit dem Fachmann bekannten Methoden erfolgen. Beispielsweise kann der NOₓ Gehalt mit IR/UV Analysatoren unter Verwendung beheizter Gasmesszellen erfolgen. Als Analysatoren kommen beispielsweise Multikomponenten FT-IR oder Einkomponentensysteme mit mehreren IR bzw. UV-Kanälen in Frage. Alternativ kann der NOₓ-Gehalt auch mit einem Chemilumineszenzanalysator mit vorgeschaltetem Konverter zur Reduktion von NO₂ zu NO gemessen werden. Der Sauerstoffgehalt kann u.a. vorteilhaft mit einem beheizten Analysator zur Messung des Paramagnetismus oder einer Zirconia-Sonde gemessen werden.

Auch kann der Sauerstoffgehalt des Produktgases am Austritt des Katalysatorbettes rechnerisch als Differenz des Sauerstoffgehaltes des Eduktgasgemisches am Eintritt des Katalysatorbettes und dem Sauerstoffverbrauch im Katalysatorbett ermittelt werden. Der Sauerstoffverbrauch im Katalysatorbett ergibt sich dabei ausgehend von den Austrittskonzentrationen der Komponenten N₂, NO, NO₂ und N₂O bzw. den daraus abgeleiteten Produktselektivitäten aus der NH₃-Eintrittskonzentration und den entsprechenden stöchiometrischen Verhältnissen von O₂/NH₃ gemäß Gleichungen (1), (5), (6) und (7).

Das Verfahren wird bevorzugt bei Drücken von 1 bar abs. bis 10 bar abs., besonders bevorzugt bei Drücken von 1,5 bar abs. bis 6 bar abs., ganz besonders bevorzugt bei Drücken von 2 bar abs. bis 5 bar abs. betrieben.

Die NH3 -Konzentration am Eintritt in den Oxidationsreaktor im Verfahren beträgt bevorzugt 1-17 Vol.-%, besonders bevorzugt 4-15 Vol.-%, insbesondere 7-14 Vol.-%. Die Obergrenze des NH3 -Gehaltes ist dabei vorteilhafterweise durch die untere Explosionsgrenze der NH3 -Sauerstoff-Gemische bestimmt, welche auch abhängig ist von anderen möglichen Gaskomponenten, wie bspw. Wasserdampf.

Für jedes Volumenprozent Ammoniak im Gasgemisch, das auf den Katalysatoren chemisch umgesetzt wird, wird eine bestimmte Wärmemenge freigesetzt, die im Falle eines Eduktgemisches von NH₃ in Luft einer Temperaturerhöhung zwischen Edukt- und Produktgemisch von ca. 68 K unter adiabaten Bedingungen entspricht. Bei anlagenbedingt vorgegebener Temperatur des ammoniak- und sauerstoffhaltigen Eintrittsgemisches ist daher die Temperatur im Prozessgasstom am Austritt des Oxidationskatalysators durch die Ammoniak-Konzentration des Gasgemisches am Eintritt des Oxidationskatalysators vorgegeben.

Der erfindungsgemäß eingesetzte Katalysator entfaltet seine höchste Leistung vorzugsweise in einem niedrigeren Temperaturbereich als die platinbasierten metallischen Katalysatoren. Die Temperatur am Austritt aus dem Katalysatorbett, z.B. der Anordnung der Katalysator-Formkörper, ist erfindungsgemäß bevorzugt zwischen 750°C - 850°C einzustellen (gemessen bei Austritt des Gasgemisches aus dem Katalysatorbett bzw. bei mehreren Katalysatorbetten bei Austritt aus dem letzten Katalysatorbett). Dies kann durch Einstellung der Eintrittstemperatur des Eduktgasgemisches und/oder der Ammoniak-Konzentration im Eduktgasgemisch erreicht werden.

Ferner ermöglicht die größere räumliche Ausdehnung der Anordnung der erfindungsgemäß eingesetzten Katalysator-Formkörper gegenüber den platinbasierten metallischen Katalysatornetzen den polytropen Betrieb durch die partielle Abfuhr bzw. Ableitung der Reaktionswärme. Dies kann z.B. erreicht werden durch Kühlung der Reaktorwände oder durch Unterbringung von integrierten Kühlvorrichtungen in der Katalysatoranordnung.

Wie bereits erwähnt, ermöglicht die hohe Aktivität der Katalysatorformkörper eine niedrige Anspringtemperatur bzw. niedrige "Blow-out"-Temperatur und damit eine tiefe Eintrittstemperatur der NH₃ und Sauerstoff enthaltenden Eduktgasmischung in das (erste) Katalysatorbett, beispielsweise in eine Anordnung von Katalysator-Formkörpern. Diese Eintrittstemperatur kann zwischen 20 °C und 300 °C betragen, bevorzugt zwischen 50 °C und 200 °C, besonders bevorzugt zwischen 50 °C und 150 °C.

### Katalysatoren

Für das Verfahren eignen sich grundsätzlich alle Katalysatoren, die als Aktivkomponente mindestens ein Übergangsmetalloxid enthalten, das kein Oxid eines Platinmetalls ist.

Ein Platinmetall ist dabei im Rahmen dieser Beschreibun ein Element der 5. und 6. Periode der Gruppen 8 bis 10 des Periodensystems der Elemente, also ein Element der Gruppe Ru, Rh, Pd, Os, Ir und Pt.

Die erfindungsgemäß eingesetzten Katalysatoren zeigen unter den Betriebsbedingungen des Verfahrens, d.h. bei einem erfindungsgemäß eingestellten NH3 /O2 -Verhältnis im Bereich zwischen 0,1 mol O2 /mol NH3 unterhalb und 0,4 mol O2 /mol NH3 oberhalb des optimalen molaren Verhältnisses überraschend erhöhte Ausbeuten an NOx , verglichen mit den Ausbeuten an NOx unter den Betriebsbedingungen der herkömmlichen Verfahren zur Ammoniakoxidation, bei denen das Verhältnis der molaren Mengen von Sauerstoff und Ammoniak am Eintritt des Eduktgasgemisches in den Katalysator mindestens 1,9 mol O2 /mol NH3 beträgt.

Somit gestatten die erfindungsgemäß eingesetzten Katalysatoren unter den Betriebsbedingungen des Verfahrens NOx -Ausbeuten, welche vergleichbar oder sogar besser sind als die NOx -Ausbeuten im Ostwald-Verfahren unter Verwendung kommerziell verfügbarer Platinmetall-Netzkatalysatoren.

Insbesondere geeignet sind Katalysatoren, die Übergangsmetalloxide enthalten die keine Oxide von Platinmetallen sind und unter der vorgenannten Bedingung keine irreversible Reduktion zu minderaktiven niedervalenten Oxiden erleiden.

In diesem Sinne einsetzbar sind daher insbesondere Katalysatoren, welche stabilisierte, d.h. dotierte Übergangsmetalloxide enthalten, die keine Oxide der Platinmetalle sind oder Mischoxide dieser Übergangsmetalloxide enthalten. Beispiele für dotierte Übergangsmetalloxide sind z.B. Eisenoxide dotiert mit z.B. Bismutoxid, Chromoxid oder Manganoxid.

Die einsetzbaren Mischoxide weisen besonders bevorzugt eine Spinell-, Delafossit- oder besonders bevorzugt eine Perowskit- oder Brownmilleritstruktur auf.

Erfindungsgemäß eingesetzte Perowskite weisen vorzugsweise die Struktur ABO_{3-δ} auf, wobei A ein-, zwei- oder dreiwertige Kationen und B drei-, vier- oder fünfwertige Kationen darstellen, der Ionenradius von A größer als der lonenradius vom B ist und δ eine Zahl zwischen 0,001 und 1,5, vorzugsweise zwischen 0,01 und 0,9 und besonders bevorzugt zwischen 0,01 und 0,5 ist. In den erfindungsgemäß eingesetzten Perowskiten können auch Gemische unterschiedlicher Kationen A und/oder Kationen B vorliegen.

Erfindungsgemäß eingesetzte Brownmillerite weisen typischerweise die Struktur A₂B₂O_{5-δ} auf, wobei A, B und δ die oben definierten Bedeutungen besitzen. Auch in den erfindungsgemäß eingesetzten Brownmilleriten können Gemische unterschiedlicher Kationen A und/oder Kationen B vorliegen.

Kationen B können innerhalb einer Verbindung vorzugsweise in mehreren Oxidationsstufen auftreten. Ein Teil oder auch alle Kationen des Typs B können jedoch auch drei- oder höherwertige Kationen mit konstanter Oxidationsstufe sein.

Die Verwendung von Perowskiten der allgemeinen Summenformel ABO_{3±δ} und/oder von Brownmilleriten der allgemeinen Summenformel A₂B₂O_{5±δ}, deren A-Position zu mehr als 50 %, vorzugsweise mehr als 80 %, besonders bevorzugt von mehr als 95 %, von einem oder mehreren Elementen ausgewählt aus der Gruppe der Seltenerdmetalle und Erdalkalimetalle besetzt ist und deren B-Position zu mehr als 50 %, vorzugsweise mehr als 80 %, besonders bevorzugt von mehr als 95 %, von einem oder mehreren Elementen ausgewählt aus der Gruppe Cr, Mn, Fe, Co, Ni besetzt wird, ist dabei besonders vorteilhaft. Hiervon wiederum insbesondere bevorzugt ist Co. Eine besonders geeignete perowskitische Verbindung ist LaCoO_{3±δ} mit δ zwischen 0,01 und 0,5.

Als weitere Dotierungsmittel eigenen sich insbesondere Übergangsmetalle, deren Oxide bevorzugt im vierwertigen Zustand existieren, wie z. B. Ce oder Mn.

Natürlich können den erfindungsgemäßen eingesetzten Katalysatoren geringe Mengen an Platinmetallen bzw. an Oxiden von Platinmetallen, beispielsweise bis zu 10 Gew. %, insbesondere bis zu 5 Gew. %, bezogen auf die Aktivkomponente(n) an Katalysator, zugefügt sein. Auch die Anwesenheit anderer Metall(oxide), die üblicherweise als zusätzliche Dotierungen eingesetzt werden, ist möglich. Beispiele für solche Dotierungen sind Alkali- und/oder Erdalkalimetalle. Auch diese Dotierungen liegen - falls anwesend - nur in geringen Mengen vor, beispielsweise in Mengen bis zu 10 Gew. %, insbesondere bis zu 5 Gew. %, bezogen auf die Aktivkomponente(n) an Katalysator.

Auf die Herstellung der im Verfahren verwendeten katalytisch aktiven Komponenten bzw. Übergangsmetalloxide, sowie deren Formgebung, soll an dieser Stelle nur beispielhaft eingegangen werden, da unterschiedliche zu diesem Zweck geeignete Herstellungsverfahren dem Fachmann aus der Praxis bekannt sind. Nachfolgend sollen dem Stand der Technik entsprechende Technologien beschrieben werden, die zur Herstellung der katalytisch aktiven Komponenten dienen können.

Die im Verfahren eingesetzten katalytisch aktiven Komponenten können mittels Festkörperreaktion hergestellt werden. Dazu werden üblicherweise als Ausgangsmaterialien Mischungen von Oxiden, binären Oxiden, oder Bildner von Oxiden, beispielsweise Carbonate eingesetzt. Die Ausgangsmaterialien werden in einer auf die Zielphase abgestimmten Zusammensetzung innig vermischt und anschließend kalziniert. Unter Kalzinierbedingungen bilden sich die katalytisch aktiven Phasen in Form von Kristalliten aus.

Zur Steigerung der Homogenität der Ausgangsmischung wird häufig eine intensive Vermahlung der Ausgangsstoffe, gegebenenfalls unter Zusatz von Hilfsmitteln, wie beispielsweise Wasser, vorgenommen. Zur Steigerung des Umsatzes an gewünschter Kristallphase können alternierend mehrere Mahl- und Kalzinierschritte durchgeführt werden. Nach der Feststellung eines hinreichenden Kristallinitätsgrades an Zielphase erfolgt, beispielsweise durch trockene Vermahlung, die Einstellung einer Partikelgröße, die für weitere formgebende Aufbereitungsschritte zur Erzeugung der Katalysatorformkörper, wie Extrusion oder Verpressung, geeignet ist.

Eine weitere geeignete Herstellungsmethode besteht in der Präzipitations- oder Fällungstechnik, bei der die Ausgangsmaterialien durch Ausfällen aus Lösungen gewonnen werden. Als Vorläufer für Metalloxide können dafür beispielsweise Metallhydroxide oder komplexierte Metallkationen, beispielsweise als Zitrate oder Oxalate, dienen, die sich aus Metallsalzlösungen, welche allein die primäre oder die primäre und sekundäre Komponente enthalten können, mit Fällungsreagenzien niederschlagen lassen. Als Fällungsreagenzien eignen sich beispielsweise Alkalien, wie Ammoniak, oder Ammoniumcarbonat.

Weiterhin kann zur Darstellung von Vorstufen der Metalloxide die Hydrolyse von Alkoxiden dienen. Als besondere Technik kann die sogenannte Sol-Gel-Synthese angewendet werden, wobei anstelle von Lösungen von stabilen kolloidalen Systemen ausgegangen wird. Als Hydrolysemittel können im Falle von Alkoxiden beispielsweise Wasser oder verschiedene Alkohole dienen. Die Stöchiometrie der herzustellenden Metalloxidphasen wird durch geeignete Wahl der Mengenverhältnisse der Ausgangsverbindungen, beispielsweise Metallsalze oder Alkoxide vorgegeben.

Die so hergestellten Metalloxidvorstufen werden durch Filtration, Waschung und Trocknung aufbereitet. Im dann folgenden Kalzinationsschritt kommt es zur Ausbildung der Metalloxidphasen, die durch alternierende Mahlungs- und Kalzinierstufen weiter homogenisiert werden können. Es folgen weitere Schritte der Pulveraufbereitung, insbesondere Mahlung und Fraktionierung, um die erhaltenen Pulver einer Formgebung durch beispielsweise Extrusion oder Verpressung zugänglich zu machen.

Die katalytisch aktiven Komponenten können auch mittels Pyrolysereaktionen hergestellt werden. Dazu werden metallhaltige Ausgangsstoffe, beispielsweise Metallsalze, metallorganische Verbindungen oder mittels Fällungstechnologie gewonnene Produkte in stark exothermer Reaktion bei hohen Temperaturen beispielsweise bis zu 1000°C umgesetzt. Den Ausgangsstoffen können bei dieser Herstellungsart Oxidationsmittel, beispielsweise Ammoniumnitrat, und organische Brennstoffe wie Harnstoff, Zitronensäure oder Glycin zugesetzt werden. Die Pyrolysereaktion kann ausgehend von Lösungen, Suspensionen oder Feststoffen eingeleitet werden. Mit diesem Verfahren lässt sich die Stöchiometrie der Zielphase durch geeignete Vorlage der Ausgangsverbindungen einstellen. Die resultierenden Pulver sind von hoher Phasenreinheit mit hoher bis sehr hoher spezifischer Oberfläche.

Zur Formgebung der hergestellten Übergangsmetalloxid-Pulver können diese und andere Aktivkomponenten bzw. Co-Komponenten in eine beliebige, vorzugsweise keramische Matrix eingearbeitet bzw. eingebettet oder auf einen beliebigen, vorzugsweise keramischen Träger aufgebracht werden.

Bevorzugt ist keramisches Material basierend auf Oxiden, Carbiden oder Nitriden der Elemente ausgewählt aus der Gruppe Si, Al, Mg, Zr und B; insbesondere bevorzugt sind keramische Materialien wie Cordierit, Mullit, Magnesiumoxid oder ganz besonders Siliziumcarbid, welches durch eine hohe chemische und mechanische Widerstandfähigkeit und herausragende Wärmeleitfähigkeit ausgezeichnet ist.

Weiterhin besonders geeignet und im Sinne der Erfindung bevorzugt ist die Verwendung von Vollkatalysatoren, d.h. von Formkörpern, welche im Wesentlichen aus katalytisch aktivem Material bestehen. So sollten die Katalysator-Formkörper zu mehr als 70%, bevorzugt zu mehr 80%, besonders bevorzugt zu mehr als 85%, bezogen auf das Gesamtgewicht des Formkörpers, aus katalytisch aktivem Material bestehen.

Der Katalysator-Formkörper kann als Formkörper beliebiger Größe und Geometrie vorliegen, bevorzugt in Geometrien, die ein großes Verhältnis von Oberfläche zu Volumen aufweisen und bei deren Durchströmung ein möglichst geringer Druckverlust erzeugt wird. Bevorzugt werden Formkörper, bei denen das Verhältnis von Oberfläche zu Volumen 0,5 bis 10 mm⁻¹, insbesondere 1-5 mm⁻¹ beträgt. Typisch sind alle in der Katalyse bekannten Geometrien, wie z.B. Zylinder, Hohlzylinder, Mehrlochzylinder, Ringe, Granulatbruch, Trilobes oder Wabenstrukturen. Besonders bevorzugt sind wabenförmige Monolithe oder sogenannte Minilithe, d.h. sehr kleine wabenförmige Formkörper, welche im Allgemeinen als Schüttgut verwendet werden. Die Formkörper können durch in der keramischen Verarbeitung bekannte Formgebungsverfahren wie z.B. Trockenpressen, Granulieren oder Extrudieren, hergestellt werden.

Die Anordnung der Katalysator-Formkörper kann beispielsweise als regellose Schüttung oder als geordnete Packung ausgeführt sein.

### Reaktor

Der erfindungsgemäß eingesetzte Ammoniakoxidationsreaktor kann wie ein herkömmlicher Ammoniakoxidationsreaktor oder "Brenner" ausgestaltet werden. Dies ist bei der Nachrüstung bestehender Anlagen von besonderem Vorteil, da keine oder nur un-wesentliche apparative Änderungen erforderlich sind. Häufig liegen die Pt-/Rh-Netze auf einer losen Schüttung aus Keramikringen. Im Verfahren kann der Katalysator-Formkörper dann anstelle der Pt-/Rh-Netze und Keramikringe, wie oben bereits erwähnt, als Schüttung oder als geordnete Packung, z. B. von Wabenkörpern in den Reaktor eingebaut werden. Am Rand des Reaktors müssen in der Regel besondere Vorkehrungen getroffen werden, um zu verhindern, dass ein Teil des ammoniak-/sauerstoffhaltigen Eduktgasgemisches an dem Katalysator vorbeifließt. Solche Vorkehrungen können z.B. gasundurchlässige hochtemperaturbeständige Metallstreifen sein, die mit der Wand des Reaktors verbunden sind und auf welchen die Katalysatorschüttung bzw. die äußeren Elemente der geordneten Katalysatorpackung teilweise aufliegen.

Gerade bei neuen Anlagen kann es von großem Vorteil sein, alternative Bauformen zur klassischen Bauform von Ammoniakoxidationsreaktoren zu verwenden, die durch einen großen Durchmesser bei in Strömungsrichtung sehr niedriger Höhe der Katalysatorpackung gekennzeichnet sind. Bei einer Reduktion des Anströmquerschnitts können so mögliche Schwierigkeiten mit der gleichmäßigen Verteilung des einströmenden Gasgemisches gemindert werden. Besonders bevorzugt ist eine schnelle Durchströmung des Katalysatorbettes bei niedrigen Verweilzeiten, da hierdurch unerwünschte Folgereaktion, wie die katalytische Zersetzung des gebildeten NO, unterdrückt werden und zudem eine platzsparende, kompakte Bauweise des Ammoniakoxidationsreaktors möglich ist. Für weitere mögliche Ausgestaltungen des Ammoniakoxidationsreaktors, ausgestattet mit dem erfindungsgemäß eingesetzten Katalysator, wird auf WO 2008/148487A1 verwiesen.

Bevorzugt wird das Verfahren bei Raumgeschwindigkeiten von 50.000 h-1 bis 500.000 h-1 , besonders bevorzugt zwischen 100.000 h-1 und 300.000 h-1 betrieben. Dabei wird im Rahmen dieser Beschreibung unter dem Begriff Raumgeschwindigkeit der Quotient aus Volumenanteilen Gasgemisch (gemessen bei 273,15 K und 1,01325 bara) pro Stunde bezogen auf einen Volumenanteil Katalysator, d.h. des Schütt- oder Packungsvolumens, verstanden. Die Raumgeschwindigkeit kann somit über den Volumenstrom des Gases und/oder über das Volumen des Katalysators bzw. dessen Menge eingestellt werden.

Unabhängig davon, welche Bauweise in der jeweiligen Anwendung bevorzugt wird, ist der Ammoniakoxidationsreaktor des Verfahrens bevorzugt mit einer Einrichtung zur Zündung der Reaktion auf dem Katalysator ausgestattet. Beispielsweise kann für diesen Zweck eine auf die Gaseintrittsseite des Katalysatorformkörpers gerichtete Wasserstoffflamme aus einer beweglichen Lanze verwendet werden.

### Verfahrensführung

Das erfindungsgemäße molare Verhältnis von O₂/NH₃ im Gasstrom am Eintritt in den Oxidationskatalysator kann technisch auf verschiedene Weise realisiert werden.

In einfachster Weise kann einem Luftstrom eine solche Menge an gasförmigen NH₃ zugesetzt werden, so dass das gewünschte molare Verhältnis von O₂/NH₃ resultiert. Einem Verhältnis von 1,25-1,75 mol O₂/mol NH₃ entspricht in diesem Fall ein NH₃-Gehalt von 14,4 Vol.-% -10,7 Vol.-%, einem Verhältnis von 1,3-1,75 mol O₂/mol NH₃ entspricht ein NH₃-Gehalt von 13,9 Vol.-% -10,7 Vol.-% und einem Verhältnis von 1,35-1,6 mol O₂/mol NH₃ entspricht ein NH₃-Gehalt von 13,5 Vol.-% -11,6 Vol.-%.

Ein anderer möglicher Schritt zur Einstellung des erfindungsgemäßen molaren Verhältnisses von O₂/NH₃ besteht darin, dass der NH₃-Verbrennung zusammen mit der Luft bzw. an deren Stelle beispielsweise ein Gasstrom zugeführt wird, der weniger als 20 Vol.-%, vorzugsweise weniger als 10 Vol.-%, besonders bevorzugt weniger als 5 Vol.-% Sauerstoff enthält.

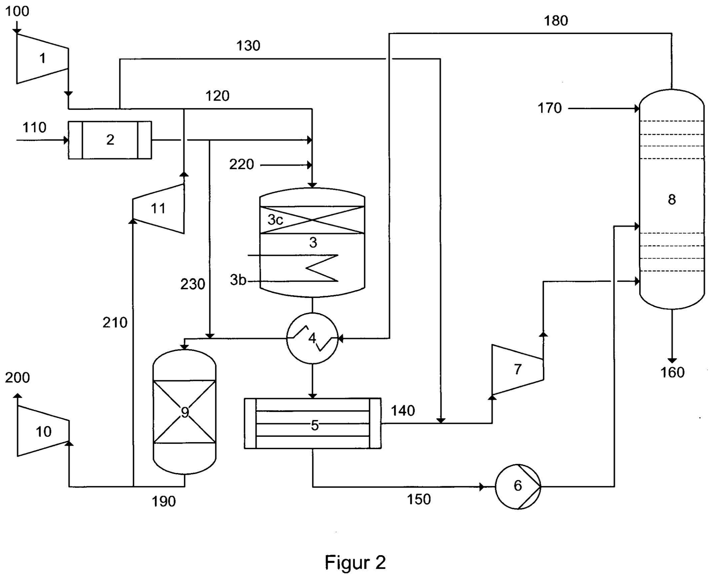

Wenn das Verfahren zur NH3 -Oxidation in einen Prozess zur Herstellung von Salpetersäure oder Caprolactam integriert ist, kann der NH3 -Verbrennung zusammen mit der Luft bzw. an deren Stelle vorzugsweise ein gewisser Anteil des sauerstoffarmen Restgases, z.B. entnommen nach einem Reaktor der Restgasreinigung zur N2 O- und NOx -Minderung, zugeführt werden. Dieses ist beispielhaft in Figur 2 für eine Zweidruck-HNO3 -Anlage dargestellt. Hier wird der gereinigte Restgasstrom (210) vor Einspeisung in die NH3 -Verbrennung noch durch eine Turbine (11) auf das entsprechende Druckniveau der NH3 -Verbrennung entspannt.

Das rückgeführte, gereinigte Restgas sollte einen Sauerstoffgehalt von < 5 Vol.-% insbesondere < 3 Vol.-%, ganz besonders < 2 Vol.-% aufweisen. Der Restgehalt an NOₓ sollte < 20 ppmv, bevorzugt < 10 ppmv besonders bevorzugt < 5 ppmv betragen.

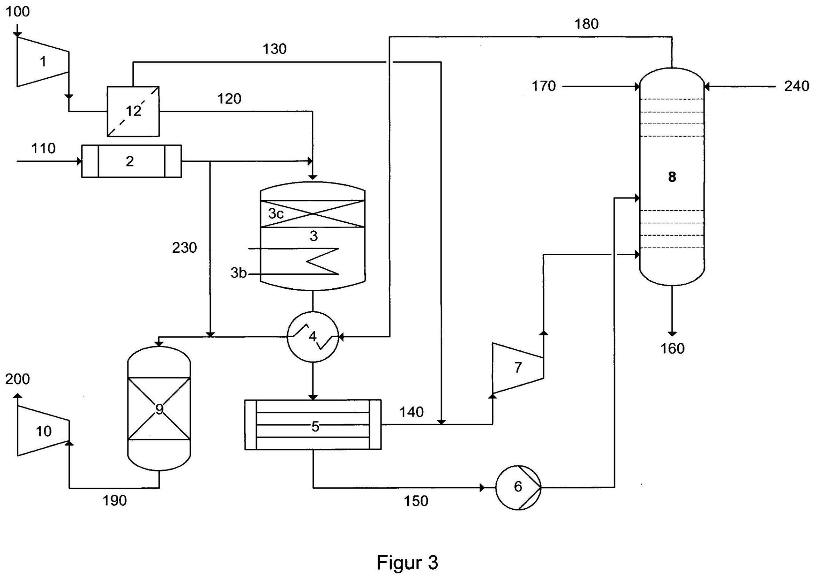

Auch kann der der NH₃-Verbrennung zugeführte Luftstrom beispielsweise durch eine Druckwechseladsorption, durch eine kryogene Zerlegung oder auch mittels Membranen, z.B. mit einer Sauerstoffanionen leitenden keramischen Membran, in einen O₂-reduzierten und einen O₂-angereicherten Teilstrom aufgeteilt werden. Eine solche Ausführungsform ist in Figur 3 beispielhaft wiedergegeben. Dem O₂-reduzierten Teilstrom mit einem O₂-Gehalt von beispielsweise 13 % Vol O₂ wird dann das zu verbrennende NH₃, beispielsweise 10 % Vol%, zugesetzt, während der O₂-reiche Teilstrom dem Prozessgas nach der primären NH₃-Oxidation zugeführt wird.

Weiterhin kann das erfindungsgemäße O₂/NH₃-Verhältnis vor Zuspeisung des NH₃ und Kontakt mit dem NH₃-Oxidationskatalysator auch durch Verdünnung des O₂-haltigen Gasstromes mit Wasserdampf eingestellt werden. Der Wasserdampf kann dann nach der NH₃-Verbrennung bei Abkühlung des Prozessgasstromes vor Eintritt in Absorptionsturm unter Bildung von Schwachsäure wieder auskondensiert werden.

Auch ist der Zusatz anderer inerter Gaskomponenten zur Verdünnung des O₂-haltigen Gasstromes denkbar.

Die vorgenannten Möglichkeiten zur Einstellung des erfindungsgemäßen molaren Verhältnisses von O₂/NH₃ stellen keine abschließende Aufzählung dar und können zudem auch in beliebiger Kombination eingesetzt werden.

### Anlagen

Die Erfindung betrifft auch eine Anlage zur Oxidation von Ammoniak umfassend
A) einen Reaktor (3) zur Ammoniakoxidation ausgestattet mit mindestens einer Zuleitung für ein Eduktgasgemisch und mit mindestens einer Ableitung für ein Prozessgas,
B) einen Katalysator (3a) im Innern des Reaktors (3), der mindestens Übergangsmetalloxid enthält, das kein Oxid eines Platinmetalls ist, und
C) eine Vorrichtung zum Einstellen eines molaren Verhältnisses von Sauerstoff zu Ammoniak von kleiner gleich 1,75 mol/mol im Eduktgasgemisch durch Vermischen eines sauerstoffhaltigen Gasstromes mit einem O₂-Gehalt <20 Vol.-% mit einer ausgewählten Menge an Ammoniak,
wobei der sauerstoffhaltige Gasstrom erzeugt wird
c1) durch eine Vorrichtung zum Verdünnen eines Luftstroms mit einem Gasstrom der weniger als 20 Vol.-%, vorzugsweise weniger als 10 Vol.-%, besonders bevorzugt weniger als 5 Vol.-% Sauerstoff enthält oder c2) durch eine Vorrichtung zur Abreicherung von Sauerstoff aus einem Sauerstoff enthaltenden Gasgemisch, vorzugsweise aus Luft oder
c3) durch eine Kombination der Maßnahmen c1 und c2.

Die erfindungsgemäße Anlage kann unter erhöhtem Druck betrieben werden. In dieser Variante enthält die Anlage mindestens einen Verdichter (1), durch den ein sauerstoffhaltiger Gasstrom, beispielsweise Luft, komprimiert und einem Reaktor (3) zur Ammoniakoxidation zugeführt wird. Die Zuführung des Ammoniaks zum Reaktor (3) kann durch Einleiten des Ammoniaks in den komprimierten sauerstoffhaltigen Gasstrom erfolgen.

Die Entspannung der Prozessgase aus dem Reaktor (3) oder aus dem Reaktor (3) nachgeschalteten Anlageteilen auf Umgebungsdruck erfolgt stromabwärts nach Verlassen des Reaktors (3) oder der Reaktor (3) nachgelagerten Anlageteile durch geeignete dem Fachmann bekannte Maßnahmen. Wird die erfindungsgemäße Anlage beispielsweise zur Erzeugung von Salpetersäure genutzt, so wird das im Reaktor (3) erzeugte Stickoxid mit sauerstoffhaltigem Sekundärgas, beispielsweise mit Sekundärluft versetzt, zu NO₂ oxidiert und in einen Absorptionsturm (8) eingeleitet, wo die Umsetzung des NO₂ mit Wasser zu Salpetersäure erfolgt. Das Stickoxide enthaltende Restgas aus dem Absorptionsturm (8) verlässt diesen, wird einer Restgasreinigung (9) zugeführt, verlässt diese als gereinigtes Restgas, wird anschließend einer Restgasturbine (10) zugeführt, wo es unter Energiegewinnung entspannt wird und in die Umgebung entlassen wird.

Bevorzugt enthält die erfindungsgemäße Anlage mindestens einen zweiten Verdichter zur Verdichtung des sauerstoffhaltigen Sekundärgasstromes vor Eintritt in einen Absorptionsturm (8), in dem das erzeugte Stickstoffoxid mit Wasser behandelt wird.

In einer besonderen Ausführungsform erfolgt die Verdünnung des Luftstromes nach c1) mit Wasserdampf und / oder Stickstoff mit einem O₂-Gehalt <5 Vol.-%.

In einer weiteren besonderen Ausführungsform erfolgt die Abreicherung von Sauerstoff nach c2) aus einem Sauerstoff enthaltenden Gasgemisch, vorzugsweise aus Luft durch Druckwechseladsorption, kryogene Zerlegung oder mittels Membranen.

Die Erfindung betrifft auch eine Anlage zur Oxidation von Ammoniak und anschließender Absorption von NOₓ umfassend
A) einen Reaktor (3) zur Ammoniakoxidation ausgestattet mit mindestens einer Zuleitung für ein Eduktgasgemisch und mit mindestens einer Ableitung für ein Prozessgas,
B) einen Katalysator (3a) im Innern des Reaktors (3), der mindestens Übergangsmetalloxid enthält, das kein Oxid eines Platinmetalls ist,
C) eine Vorrichtung zum Einstellen eines molaren Verhältnisses von Sauerstoff zu Ammoniak von kleiner gleich 1,75 mol/mol im Eduktgasgemisch durch Vermischen eines sauerstoffhaltigen Gasstromes mit einem O₂-Gehalt <20 Vol.-% mit einer ausgewählten Menge an Ammoniak,
   wobei der sauerstoffhaltige Gasstrom erzeugt wird
   c1) durch eine Vorrichtung zum Verdünnen eines Luftstroms mit einem Gasstrom der weniger als 20 Vol.-%, vorzugsweise weniger als 10 Vol.-%, besonders bevorzugt weniger als 5 Vol.-% Sauerstoff enthält oder
   c2) durch eine Vorrichtung zur Abreicherung von Sauerstoff aus einem Sauerstoff enthaltenden Gasgemisch, vorzugsweise aus Luft, oder
   c3) durch eine Kombination der Maßnahmen c1 und c2,
D) einen Absorptionsturm (8) zur Absorption von NOₓ und Bildung von HNO₃, HNO₂ oder Lösungen von Nitraten oder Nitriten, und
E) eine zwischen Reaktor (3) zur Ammoniakoxidation und Absorptionsturm (8) ange-ordnete Vorrichtung zur Vereinigung des NOₓ-haltigen Prozessgasstromes mit einem sauerstoffhaltigen Gasstrom, der mehr als 25 Vol.-%, vorzugsweise mehr als 30 Vol.-%, besonders bevorzugt mehr als 40 Vol.-% Sauerstoff enthält.

In einer besonderen Ausführungsform erfolgt die Verdünnung des Luftstromes nach c1) mit Wasserdampf oder mit einem Stickstoffstrom der weniger als 20 Vol.-%, vorzugsweise weniger als 10 Vol.-%, besonders bevorzugt weniger als 5 Vol.-% Sauerstoff enthält. Besonders bevorzugt wird der Stickstoffstrom mit einem O₂-Gehalt <5 Vol.-% entnommen aus der Restgasleitung stromabwärts des Absorptionsturmes.

In einer weiteren besonderen Ausführungsform erfolgt die Abreicherung von Sauerstoff nach c2) aus einem Sauerstoff enthaltenden Gasgemisch, vorzugsweise aus Luft durch Druckwechseladsorption, kryogene Zerlegung oder mittels Membranen.

Bevorzugt erfolgt die Erzeugung des sauerstoffhaltigen Gasstroms, welcher gemäß E) mit dem NOₓ-haltigen Prozessgasstrom vereint wird, durch Sauerstoffanreicherung von Luft durch Druckwechseladsorption, kryogene Zerlegung oder mittels Membranen.

Weiterhin bevorzugt erfolgt am Kopf des Absorptionsturms (8) eine Zugabe eines ein Peroxid enthaltenden Stroms. Dabei kann es sich um einen Flüssigkeitsstrom handeln, der ein gelöstes Peroxid enthält. Beispiele dafür sind Lösungen enthaltend eine anorganische Peroxidverbindung, wie Wasserstoffperoxid oder Perborat, oder Lösungen enthaltend eine organische Peroxyverbindung, wie ein organisches Peroxid, ein organisches Hydroperoxid oder eine organische Percarbonsäure oder deren Ester.

Vorzugsweise sind die vorgenannten Anlagen zur Oxidation von Ammoniak in eine Anlage zur Herstellung von Salpetersäure oder von Caprolactam integriert.

In den Figuren 1 - 3 werden am Beispiel einer Anlage zur Herstellung von Salpetersäure zum einem der Stand der Technik (Figur 1) und zum anderen unterschiedliche Varianten einer erfindungsgemäßen Anlage ( Figuren 2 - 3) beispielhaft illustriert. Es zeigen:
- Figur 1 : Eine vereinfachte schematische Darstellung einer herkömmlichen Monomitteldruckanlage zur Salpetersäureproduktion.
- Figuren 2 bis 3 : Schematische Darstellungen von Varianten des Verfahrens / der erfindungsgemäßen Anlage integriert in eine Zweidruckanlage zur Salpetersäureproduktion.
- Figuren 4, 5 und 6 : Die Abhängigkeit der NOx -Ausbeute vom Sauerstoffgehalt im Eduktgasgemisch bzw. vom molaren Verhältnis von Sauerstoff zu Ammoniak im Eduktgas-gemisch für drei Varianten des Verfahrens

Figur 1 zeigt ein vereinfachtes Fließbild einer herkömmlichen Monomitteldruckanlage. In einem Luftverdichter (1) wird ein durch Leitung 100 zugeführter Luftstrom komprimiert und dem Reaktor (3) für die Ammoniakoxidation über Leitung 120 zugeführt. Vor dem Eintritt in den Reaktor (3) wird die verdichtete Luft in Leitung 120 mit gasförmigem Ammoniak versetzt, welcher zuvor über Leitung 110 in flüssiger Form einem Ammoniakverdampfer (2) zugeführt wurde. Außerdem wird ein Teil der verdichteten Luft aus Leitung 120 abgezweigt und über Leitung 130 als sog. Sekundärluft dem Prozessgas vor Eintritt in den Absorptionsturm (8) zugeführt. Im Reaktor (3), in welchem Platinmetallnetze als Katalysatoren (3a) auf breiter Fläche aufgespannt sind, findet die Ammoniakoxidation statt, wobei der Ammoniak zum überwiegenden Teil zu NO und H₂O oxidiert wird. Das resultierende Produktgas gibt einen ersten Teil der Reaktionswärme im Abhitzeteil des Reaktors (3) an einen Wärmetauscher (3b) ab, verlässt den Reaktor (3) und passiert unter fortlaufender Oxidation des gebildeten NO mit restlichem bzw. über Leitung 130 zugeführtem Luftsauerstoff weitere Wärmetauscher (4) zur weiteren Abkühlung des Prozessgases, bevor dieses dann dem Absorptionsturm (8) zugeführt wird. Mindestens ein Wärmtauscher ist dabei als Kondensator (5) ausgeführt, in welchem ein Teil des gebildeten NOₓ und H₂O als Säurekondensat abgeschieden wird, das seinerseits über Leitung 150 unter Einsatz einer Pumpe (6) dem Absorptionsturm (8) zugeführt. Das verbleibende, den noch überwiegenden Teil des NOₓ enthaltende Gasgemisch wird nach Vereinigung mit aus Leitung 130 entstammender Sekundärluft über Leitung 140 in den Absorptionsturm (8) eingeleitet. Die zusätzliche dem Prozessgas zugeführte Luft dient der weiteren Oxidation des im Prozessgas enthaltenen NO zu NO₂. Im Absorptionsturm (8) erfolgt dann die Umsetzung des NOₓ mit Wasser zu Salpetersäure, welche den Absorptionsturm (8) über Leitung 160 verlässt. Das erforderliche Wasser wird dem Absorptionsturm (8) über Leitung 170 zugeführt. Das Stickoxide enthaltende Restgas aus dem Absorptionsturm (8) verlässt diesen über Leitung 180, passiert u.a. den Wärmetauscher (4), wo es eine Aufheizung erfährt und wird der Restgasreinigung (9) zugeführt. Dort erfolgt in modernen Anlagen unter Zugabe von gasförmigem Ammoniak (Zuleitung 230) ein katalytischer Abbau des im Restgas enthaltenen N₂O und der NOₓ-Stickoxide in Stickstoff und Sauerstoff bzw. in Stickstoff und Wasser. Das die Restgasreinigung (9) verlassende gereinigte Restgas, welches überwiegend aus Stickstoff und zu geringen Teilen aus Wasser und Sauerstoff und ggf. Spuren von restlichen Stickoxiden besteht, wird anschließend über Leitung 190 einer Restgasturbine (10) zugeführt, wo es unter Energiegewinnung entspannt wird, diese über Leitung 200 verlässt und in die Umgebung entlassen wird.

Das Fließbild einer typischen Zweidruckanlage zur Herstellung von HNO₃ unterscheidet sich von der in Figur 1 dargestellten Monomitteldruckanlage durch eine zusätzliche Kompressionsstufe, welche in der Leitung 140 nach Zuführung des Sekundärluftstromes 130 und vor Eintritt in den Absorptionsturm (8) angeordnet ist.

Ebenfalls nicht dargestellt in Figur 1 ist eine funktionelle Einheit zur Bleichung der Produktsäure mit dem Sekundärluftstrom. Diese kann in den unteren Teil der Absorptionskolonne integriert sein oder auch als separate Kolonne ausgeführt sein, welche in einer Zweidruckanlage vor Zuführung des Sekundärluftstromes 130 in die Leitung 140 des Prozessgasstromes stromabwärts der vorgenannten Kompressionsstufe für das Prozessgas angeordnet ist.

Figur 2 gibt beispielhaft ein Fließbild einer bzw. mehrerer Varianten des Verfahrens sowie einer oder mehrerer Varianten einer erfindungsgemäßen Anlage am Beispiel einer Zweidruck-Salpetersäureanlage wieder.

Luftverdichter (1), Ammoniakverdampfer (2), Reaktor (3), Wärmetauscher (3b, 4), Kondensator (5), Pumpe (6), Absorptionsturm (8), Restgasreinigung (9) und Restgasturbine (10) sowie Leitungen 100, 110, 120, 130, 140, 150, 160, 170, 180, 190, 200 und 230 entsprechen in Funktion und Verschaltung den in Figur 1 dargestellten Elementen. Da es sich um eine Zweidruckanlage handelt ist im Unterschied zu Figur 1 zusätzlich ein Verdichter (7) gezeigt, mit dem das Prozessgas aus Leitung 140 vor dessen Eintritt in den Absorptionsturm (8) verdichtet wird.

Weiterhin ist im Unterschied zur Figur 1 der Katalysator (3c) kein Platinmetallnetz, sondern ist als Packung oder Schüttung von Katalysatorformkörpern ausgeführt, welche ein Übergangsmetalloxid enthalten, das kein Oxid eines Platinmetalls ist.

Zusätzlich ist in der Anlage der Figur 2 eine Leitung 220 vorgesehen, durch die ein gasförmiges Verdünnungsmedium mit einem Sauerstoffgehalt <20 Vol.-%, beispielsweise ein sauerstoffverarmter Luftstrom oder Wasserdampf, in das Eduktgasgemisch vor dessen Eintritt in den Reaktor (3) eingespeist werden kann. Außerdem besteht die Möglichkeit einen Teil des aus der Restgasreinigung (9) stammenden gereinigten Restgases (enthaltend überwiegend Stickstoff) vor dessen Eintritt in die Restgasturbine (10) einem Expander (11) zuzuführen und soweit zu entspannen, so dass dieses der komprimierten Luft in Leitung 120 zugeführt werden kann.

Mit diesen Maßnahmen (Zuführung eines Verdünnungsmediums mit einem Sauerstoffgehalt <20 Vol.-% über Zuleitung 220 oder partieller Rückführung des gereinigten Restgases über Leitung 210), einzeln oder einer Kombination, kann das erfindungsgemäß gewünschte Verhältnis von Sauerstoff zu Ammoniak im Eduktgasgemisch kontrolliert eingestellt werden. Weiterhin ist es möglich, mit der in Figur 2 dargestellten Anlage mit oder ohne Nutzung der Zuleitungen 210 und 220 das erfindungsgemäß gewünschte Verhältnis von Sauerstoff zu Ammoniak im Eduktgasgemsich durch einen verglichen zu herkömmlichen HNO₃-Verfahren reduzierten primären Luftstrom 120 und erhöhten Sekundärluftstrom 130 einzustellen.

Figur 3 beschreibt weitere Varianten des Verfahrens sowie einer erfindungsgemäßen Anlage am Beispiel einer Zweidruck-Salpetersäureanlage. Luftverdichter (1), Ammoniakverdampfer (2), Reaktor (3), Katalysatorbett (3c), Wärmetauscher (3b, 4), Kondensator (5), Pumpe (6), Prozessgasverdichter (7), Absorptionsturm (8), Restgasreinigung (9) und Restgasturbine (10) sowie Leitungen 100, 110, 140, 150, 160, 170, 180, 190, 200 und 230) entsprechen in Funktion und Verschaltung prinzipiell den in Figur 2 dargestellten Elementen. Zusätzlich ist in der Anlage der Figur 3 eine Vorrichtung (12) zum Zerlegen von Luft vorgesehen, in welche die aus Luftverdichter (1) stammende und komprimierte Luft eingeleitet wird. In Vorrichtung (12) erfolgt eine (teilweise) Auftrennung von Luft in einen Anteil mit reduziertem Sauerstoffgehalt und in einen Anteil mit erhöhtem Sauerstoffgehalt. Das Gasgemisch mit erhöhtem Stickstoffgehalt wird in Leitung 120 eingespeist und dem Reaktor (3) zugeführt. Das Gasgemisch mit dem erhöhten Sauerstoffgehalt wird in Leitung 130 eingespeist und dem aus dem Kondensator (5) stammenden, überwiegend NOx enthaltenden Gasgemisch in Leitung 140 zugeführt. Mit diesen Maßnahmen kann ebenfalls ein gewünschtes Verhältnis von Sauerstoff zu Ammoniak im Eduktgasgemisch kontrolliert eingestellt werden. werden.

Außerdem ist in Figur 3 eine Leitung 240 gezeigt, über welche ein Peroxid enthaltender Flüssigkeitsstrom in den Absorptionsturm (8) geführt werden kann. Die Zuführung dieses Stromes bildet eine alternative Möglichkeit zur Zuführung des für die NO-Oxidation im Absorptionsturm benötigten Sauerstoffs. Diese Maßnahme kann als Alternative oder in Kombination mit der vorgenannten Maßnahme E, d.h. einer zwischen Reaktor (3) zur Ammoniakoxidation und Absorptionsturm (8) angeordneten Vorrichtung zur Vereinigung des NOₓ-haltigen Prozessgasstromes mit einem sauerstoffhaltigen Gasstrom, betrieben werden.

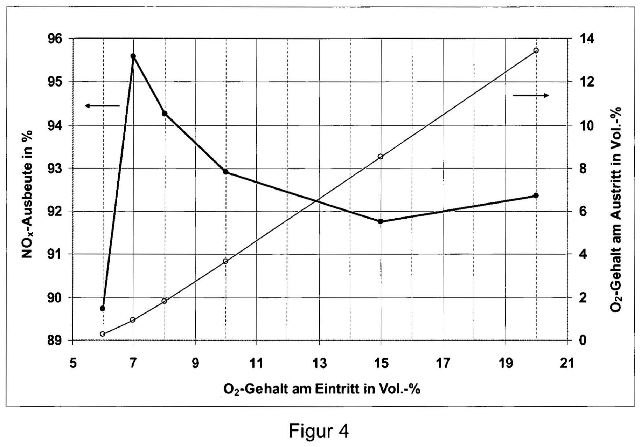

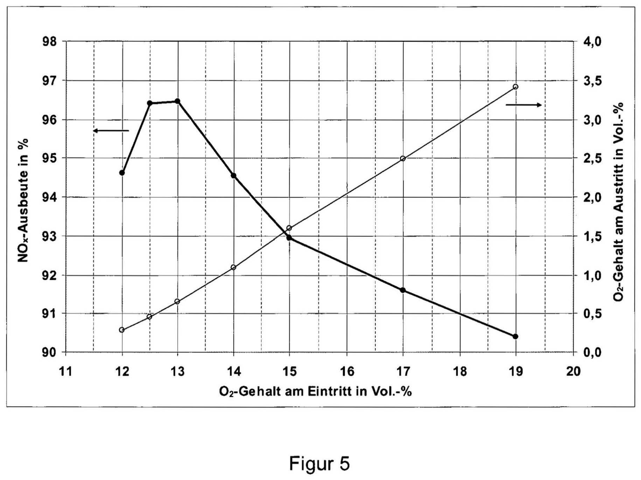

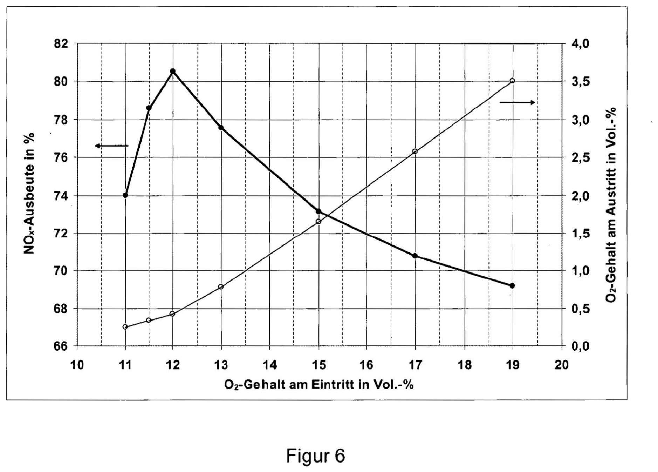

Figuren 4 bis 6 zeigen an Beispielen ausgewählter Übergangsmetalloxid-Katalysatoren (Figur 4 und 5 : Aktivkomponente LaCoO3 ; Figur 6 : Aktivkomponente LaMnO3), wie bei der Oxidation von NH3 für verschiedene Varianten des Verfahrens im Labormaßstab durch Reduzierung des Sauerstoffgehaltes in einem Ammoniak und Sauerstoff enthaltenden Gasgemisch d.h. durch Einstellung des erfindungsgemäßen Verhältnisses der molaren Mengen von Sauerstoff und Ammoniak am Eintritt des Eduktgasgemisches in das Katalysatorbett gesteigerte Ausbeuten an NOx erzielt werden können.

Zu diesem Zweck wurden wabenförmige Katalysatoren von 1 cm Länge, einem Durchmesser von etwa 18 mm und einer Zelldichte von 200 cpsi bzw. 400 cpsi in einen Rohrreaktor aus Quarzglas mit einem Innendurchmesser von 20 mm eingesetzt und mit einem synthetischen Gasgemisch aus Ammoniak, Sauerstoff und Stickstoff durchströmt. Die Dosierung der Gasströme erfolgte mittels thermischer Massendurchflussgeräte (MFC), wobei unter eingestellten Ammoniakkonzentrationen von 5 Vol.-% (Figur 4) bzw. 10 Vol.-% (Figuren 5 und 6) die Sauerstoffkonzentration wurde in den Bereichen von 20 bis 6 Vol.-% (Figur 4) und von 19 bis 12 % Vol. (Figur 5) bzw. 19 bis 11 %Vol. (Figur 6) variiert. Die Raumgeschwindigkeit betrug jeweils 100.000 h⁻¹. Mittels einer Druckregelung am Reaktoraustritt wurde ein Betriebsdruck von 4,5 barü (Figuren 4 und 6) bzw. 2,0 barü (Figur 5) eingestellt. Die einzelnen Bedingungen der in den Figuren 4 - 6 wiedergegebenen Beispiele sind in der nachfolgenden Tabelle aufgeführt.

| **Bedingungen** | **Figur 4** | **Figur 5** | **Figur 6** |
|---|---|---|---|
| Aktivkomponente | LaCoO₃ | LaCoO₃ | LaMnO₃ |
| Waben länge | 1 cm | 1 cm | 1 cm |
| Wabendurchmesser | 18 mm | 18 mm | 18 mm |
| Zelldichte | 200 cpsi | 400 cpsi | 200 cpsi |
| Raumgeschwindigkeit | 100.000 h⁻¹ | 100.000 h⁻¹ | 100.000 h⁻¹ |
| Druck | 4,5 barü | 2,0 barü | 4,5 barü |
| Austrittstemperatur | 750 °C | 825 °C | 900 °C |
| NH₃-Eintrittskonzentration | 4,5-4,8 Vol.-% | 9,1 - 9,3 Vol.-% | 9,1 - 9,2 Vol.-% |
| O₂-Eintrittskonzentration | 6-20 Vol.-% | 12 - 19 Vol.-% | 11-19 Vol.-% |

Zum Ausgleich von Wärmeverlusten wurde das Reaktionsrohr mit einem Metallmantel umgeben und in zwei übereinander angeordnete Rohröfen verbracht. Die resultierende Reaktionstemperatur wurden mit einem Thermoelement etwa 1 mm unterhalb der Wabe (Tₐᵤₛ) gemessen. Diese Austrittstemperatur betrug im Falle der Ammoniakeintrittskonzentration von 5 Vol.-% etwa 750 °C (Figur 4) und bei 10 Vol.-% 825 °C (Figur 5) bzw. etwa 900 °C (Figur 6). Analysen des Versuchsgases wurden mittels einer Umschaltung abwechselnd vom Eintritt und Austritt des Reaktors zu einem Analysator geführt. Als Analysator zur Bestimmung der Volumenkonzentrationen von Ammoniak, Stickstoffmonoxid (NO), Stickstoffdioxid (NO₂) sowie von Wasser kam ein FT-IR-Gerät (Modell ",6700 Advanced Gold" der Firma Thermo-Nicolet), ausgestattet mit einer beheizten Gasküvette von 15 cm Länge zum Einsatz. Die Ermittlung der O₂-Konzentration erfolgte mittels des Gerätes OXYMAT 6, beheizte Version der Fa. Siemens.

Die angegeben Volumenkonzentration entsprechen dabei in erster Näherung den molaren Konzentrationen der einzelnen Komponenten. Für jede Einstellung einer neuen Sauerstoffeintrittskonzentration wurde anhand des analytischen Ergebnisses vom Gas am Reaktorausgang das Erreichen eines stationären Betriebspunktes abgewartet. In den Figuren 4 bis 6 sind die berechneten Ausbeuten des Summenparameters NOₓ (= NO + NO₂) bezogen auf die Ammoniakeintrittskonzentrationen in Abhängigkeit von der Sauerstoffeintrittskonzentration aufgetragen, wobei zur Berechnung der NOₓ-Ausbeute aus den molaren Konzentrationen die mit den einzelnen Primärreaktionen (Schemata 1, 5, 6 und 7) verbundenen Volumenänderungen berücksichtigt wurden.

Deutlich zu erkennen ist jeweils ein ausgeprägtes Maximum in der NOₓ-Ausbeute entsprechend der Dichte der Messpunkte in Figur 4 lokalisiert bei einem O₂-Gehalt von 7 Vol.-% entsprechend einem Verhältnis der molaren O₂- und NH₃-Eintrittskonzentrationen von 1,4 mol/mol, in Figur 5 bei einem O₂-Gehalt von 13 Vol.-% entsprechend einem Verhältnis der molaren O₂- und NH₃-Eintrittskonzentrationen von 1,3 mol/mol und in Figur 6 bei einem O₂-Gehalt von 12 Vol.-% entsprechend einem Verhältnis der molaren O₂- und NH₃-Eintrittskonzentrationen von 1,2 mol/mol.

Weiterhin deutlich zu erkennen ist, das bei einem nicht erfindungsgemäßen Verhältnis der molaren O₂- und NH₃-Eintrittskonzentrationen von 1,9 mol/mol, wie dieses typischerweise in herkömmlichen technischen Prozessen zur Ammoniakoxidation verwendet wird (10 %Vol. NH₃ in Luft), eine deutlich geringere NOₓ-Ausbeute erzielt wird, als im erfindungsgemäß gewählten Bereich um das optimale molare Verhältnis von Sauerstoff zu Ammoniak.

Eine Unterschreitung des vorgenannten Bereiches führt zu einer deutlich geminderten NOₓ-Ausbeute, wie in Figur 4 bei einem O₂-Gehalt von 6 Vol.-% entsprechend einem Verhältnis der molaren O₂- und NH₃-Eintrittskonzentrationen von 1,2 mol/mol, in Figur 5 bei einem O₂-Gehalt von 12 Vol.-% entsprechend einem Verhältnis der molaren O₂- und NH₃-Eintrittskonzentrationen von 1,2 mol/mol und in Figur 6 bei einem O₂-Gehalt von 11 Vol.-% entsprechend einem Verhältnis der molaren O₂- und NH₃-Eintrittskonzentrationen von 1,1 mol/mol ersichtlich.

Die Herstellung der Wabenkörper erfolgte durch Extrusion von entsprechend aufbereiteten LaMnO₃- bzw. LaCoO₃-Pulvern unter Zugabe von entsprechenden Bindemitteln und Plastifizierhilfsmitteln und anschließender Trocknung und Kalzination. Die Ausgangspulver für die getesteten Katalysatoren wurden durch alkalische Fällung aus stöchiometrisch angesetzten Lösungen der entsprechenden Metallsalze, Filtration, Waschen und abschließende Kalzinierung der dabei erhaltenen Präzipitate hergestellt. Die Phasenausbildung und Reinheit der jeweiligen Perowskitphasen wurde durch XRD (Röntgendiffraktometrie) überprüft.

## Patentansprüche

1. Anlage zur Oxidation von Ammoniak umfassend:
A) Reaktor (3) zur Ammoniakoxidation ausgestattet mit mindestens einer Zuleitung für ein Eduktgasgemisch und mit mindestens einer Ableitung für ein Prozessgas,
B) Katalysator (3c) im Innern des Reaktors (3), der mindestens ein Übergangsmetalloxid enthält, das kein Oxid eines Platinmetalls ist,
C) Vorrichtung zum Einstellen eines molaren Verhältnisses von Sauerstoff zu Ammoniak im Eduktgasgemisch von kleiner gleich 1,75 mol/mol, indem ein sauerstoffhaltiger Gasstrom mit einem O2-Gehalt <20 Vol.-% mit einer ausgewählten Menge an Ammoniak vermischt wird, zum Erzeugen des sauerstoffhaltigen Gasstroms aufweisend
c2)eine Vorrichtung (12) zur Abreicherung von Sauerstoff aus einem Sauerstoff enthaltenden Gasgemisch, vorzugsweise aus Luft sowie umfassend
D) einen Absorptionsturm (8) zur Absorption von NOx und Bildung von HNOs, HNO2 oder Lösungen von Nitraten oder Nitriten, und
E) eine zwischen Reaktor (3) zur Ammoniakoxidation und Absorptionsturm (8) angeordnete Vorrichtung zur Vereinigung des NOx-haltigen Prozessgasstromes mit einem sauerstoffhaltigen Gasstrom, der mehr als 25%, vorzugsweise mehr als 30%, besonders bevorzugt mehr als 40% Sauerstoff enthält, und/oder eine in den Absorptionsturm (8) mündende Leitung (240) zur Einleitung eines Peroxid enthaltenden Stroms,
wobei als Vorrichtung (12) zur Abreicherung von Sauerstoff aus einem Sauerstoff enthaltenden Gasgemisch, vorzugsweise aus Luft gemäß c2) eine Druckwechseladsorption, kryogene Zerlegung oder Membranen vorgesehen sind
und wobei der sauerstoffhaltige Gasstrom gemäß E) durch Sauerstoffanreicherung von Luft durch Druckwechseladsorption, kryogene Zerlegung oder mittels Membranen erzeugt wird.

2. Anlage zur Oxidation von Ammoniak umfassend:
A) Reaktor (3) zur Ammoniakoxidation ausgestattet mit mindestens einer Zuleitung für ein Eduktgasgemisch und mit mindestens einer Ableitung für ein Prozessgas,
B) Katalysator (3c) im Innern des Reaktors (3), der mindestens ein Übergangsmetalloxid enthält, das kein Oxid eines Platinmetalls ist,
C) Vorrichtung zum Einstellen eines molaren Verhältnisses von Sauerstoff zu Ammoniak im Eduktgasgemisch von kleiner gleich 1,75 mol/mol, indem ein sauerstoffhaltiger Gasstrom mit einem O2-Gehalt <20 Vol.-% mit einer ausgewählten Menge an Ammoniak vermischt wird,
zum Erzeugen des sauerstoffhaltigen Gasstroms aufweisend
c1) eine Vorrichtung zum Verdünnen eines Luftstroms mit einem Gasstrom der weniger als 20 Vol.%, vorzugsweise weniger als 10 Vol. -%, besonders bevorzugt weniger als 5 Vol.-% Sauerstoff enthält, wobei die Verdünnung des Luftstromes gemäß c1) mit einem Gasstrom entnommen aus dem Restgas stromabwärts des Absorptionsturmes (8) erfolgt.

3. Anlage zur Oxidation von Ammoniak nach Anspruch 21 oder 22, **dadurch gekennzeichnet, dass** diese in eine Anlage zur Herstellung von Salpetersäure oder von Caprolactam integriert ist.

4. Anlage nach mindestens einem der Ansprüche 22 oder 23, **dadurch gekennzeichnet, dass** der Luftstrom gemäß c1) mit Wasserdampf oder mit einem Stickstoffstrom verdünnt wird, der weniger als 20 Vol.-%, vorzugsweise weniger als 10 Vol.-%, besonders bevorzugt weniger als 5 Vol.-% Sauerstoff enthält.

5. Anlage nach mindestens einem der Ansprüche 21 bis 24, **dadurch gekennzeichnet, dass** diese mindestens einen Verdichter (1) aufweist, durch den ein sauerstoffhaltiger Gasstrom komprimiert und dem Reaktor (3) zur Ammoniakoxidation zugeführt wird

## Claims

1. A system for the oxidation of ammonia comprising:
A) a reactor (3) for ammonia oxidation equipped with at least one inlet for a reactant gas mixture and with at least one outlet for a process gas,
B) a catalyst (3c) inside the reactor (3) containing at least one transition metal oxide that is not an oxide of a platinum group metal,
C) a device for adjusting a molar ratio of oxygen to ammonia in the reactant gas mixture of less than or equal to 1.75 mol/mol by mixing an oxygen-containing gas stream with an O₂ content <20 vol.% with a selected amount of ammonia, comprising for generating the oxygen-containing gas stream
c2) a device (12) for removing oxygen from an oxygen-containing gas mixture, preferably air, and comprising
D) an absorption tower (8) for absorbing NOx and forming HNO₃, HNO₂, or solutions of nitrates or nitrites, and
E) a device arranged between reactor (3) for ammonia oxidation and absorption tower (8) for combining the NOx-containing process gas stream with an oxygen-containing gas stream containing more than 25%, preferably more than 30%, particularly preferably more than 40% oxygen, and/or a line (240) opening into the absorption tower (8) for introducing a peroxide-containing stream,
wherein the device (12) for removing oxygen from an oxygen-containing gas mixture, preferably air according to c2), is a pressure swing adsorption, cryogenic decomposition or membranes
and wherein the oxygen-containing gas stream according to E) is generated by oxygen enrichment of air by pressure swing adsorption, cryogenic decomposition or by means of membranes.

2. The system for the oxidation of ammonia comprising:
A) a reactor (3) for ammonia oxidation equipped with at least one inlet for a reactant gas mixture and with at least one outlet for a process gas,
B) a catalyst (3c) inside the reactor (3) containing at least one transition metal oxide that is not an oxide of a platinum group metal,
C) a device for adjusting a molar ratio of oxygen to ammonia in the reactant gas mixture of less than or equal to 1.75 mol/mol by mixing an oxygen-containing gas stream with an O₂ content <20 vol.% with a selected amount of ammonia,
comprising for generating the oxygen-containing gas stream
c1) a device for diluting an air stream with a gas stream containing less than 20 vol%, preferably less than 10 vol%, and particularly preferably less than 5 vol% oxygen, wherein the dilution of the air stream according to c1) with a gas stream taken from the residual gas downstream of the absorption tower (8) is carried out.

3. The system for the oxidation of ammonia according to claim 1 or 2, **characterized in that** it is integrated into a system for the production of nitric acid or caprolactam.

4. The system according to at least one of claims 2 or 3, **characterized in that** the air stream according to c1) is diluted with steam or with a nitrogen stream containing less than 20 vol%, preferably less than 10 vol%, and particularly preferably less than 5 vol% oxygen.

5. The system according to at least one of claims 1 to 4, **characterized in that** it has at least one compressor (1) by which an oxygen-containing gas stream is compressed and fed to the reactor (3) for ammonia oxidation.

## Revendications

1. Installation destinée à l'oxydation de l'ammoniac, comprenant :
A) un réacteur (3) pour l'oxydation de l'ammoniac, pourvu d'au moins une conduite d'alimentation d'un mélange gazeux de réactifs et d'au moins une conduite d'évacuation d'un gaz de procédé,
B) un catalyseur (3c) disposé à l'intérieur du réacteur (3), le catalyseur contenant au moins un oxyde de métal de transition qui n'est pas un oxyde d'un métal du groupe du platine,
C) un dispositif pour régler un rapport molaire oxygène/ammoniac dans le mélange gazeux de réactifs inférieur ou égal à 1,75 mol/mol, en mélangeant un flux gazeux contenant de l'oxygène, présentant une teneur en O₂ < 20 % vol., avec une quantité sélectionnée d'ammoniac, pour la production du flux gazeux contenant de l'oxygène, comprenant
c2) un dispositif (12) pour appauvrir en oxygène un mélange gazeux contenant de l'oxygène, de préférence de l'air, et comprenant en outre
D) une tour d'absorption (8) destinée à l'absorption des NOx et à la formation de HNO₃, HNO₂ ou de solutions de nitrates ou de nitrites, et
E) un dispositif disposé entre le réacteur (3) d'oxydation de l'ammoniac et la tour d'absorption (8), destiné à combiner le flux de gaz de procédé contenant des NOx avec un flux gazeux contenant de l'oxygène, présentant une teneur en oxygène supérieure à 25 %, de préférence supérieure à 30 %, particulièrement de préférence supérieure à 40 %, et/ou une conduite (240) débouchant dans la tour d'absorption (8) pour l'introduction d'un flux contenant du peroxyde,
le dispositif (12) destiné à appauvrir en oxygène un mélange gazeux contenant de l'oxygène, de préférence de l'air, selon c2), étant choisi parmi une adsorption modulée en pression, une séparation cryogénique ou des membranes,
et le flux gazeux contenant de l'oxygène selon E) étant obtenu par enrichissement en oxygène de l'air par adsorption modulée en pression, séparation cryogénique ou au moyen de membranes.

2. Installation destinée à l'oxydation de l'ammoniac, comprenant :
A) un réacteur (3) pour l'oxydation de l'ammoniac, pourvu d'au moins une conduite d'alimentation d'un mélange gazeux de réactifs et d'au moins une conduite d'évacuation d'un gaz de procédé,
B) un catalyseur (3c) disposé à l'intérieur du réacteur (3), le catalyseur contenant au moins un oxyde de métal de transition qui n'est pas un oxyde d'un métal du groupe du platine,
C) un dispositif pour régler un rapport molaire oxygène/ammoniac dans le mélange gazeux de réactifs inférieur ou égal à 1,75 mol/mol, en mélangeant un flux gazeux contenant de l'oxygène, présentant une teneur en O₂ < 20 % vol., avec une quantité sélectionnée d'ammoniac,
pour produire le flux gazeux contenant de l'oxygène, comprenant
c1) un dispositif pour diluer un flux d'air au moyen d'un flux gazeux contenant moins de 20 % vol., de préférence moins de 10 % vol., particulièrement de préférence moins de 5 % vol. d'oxygène, la dilution du flux d'air selon c1) s'effectuant avec un flux gazeux prélevé sur le flux de gaz résiduaire en aval de la tour d'absorption (8).

3. Installation destinée à l'oxydation de l'ammoniac selon la revendication 1 ou 2, **caractérisée en ce qu'**elle est intégrée dans une installation de production d'acide nitrique ou de caprolactame.

4. Installation selon au moins l'une des revendications 2 ou 3, **caractérisée en ce que** le flux d'air selon c1) est dilué avec de la vapeur d'eau ou avec un flux d'azote contenant moins de 20 % en volume, de préférence moins de 10 % en volume, particulièrement de préférence moins de 5 % vol. d'oxygène.

5. Installation selon au moins l'une des revendications 1 à 4, **caractérisée en ce qu'**elle comprend au moins un compresseur (1) par l'intermédiaire duquel un flux gazeux contenant de l'oxygène est comprimé et introduit dans le réacteur (3) pour l'oxydation de l'ammoniac.
